(19) Europäisches Patentamt
European Patent Office
Office européen des brevets

(11) **EP 4 269 522 A1**

(12) **EUROPEAN PATENT APPLICATION**
published in accordance with Art. 153(4) EPC

(43) Date of publication:
**01.11.2023 Bulletin 2023/44**

(21) Application number: **21910568.1**

(22) Date of filing: **16.12.2021**

(51) International Patent Classification (IPC):
*C09J 7/38* (2018.01)      *C09J 7/24* (2018.01)
*C09J 153/00* (2006.01)      *C09J 153/02* (2006.01)

(52) Cooperative Patent Classification (CPC):
**C09J 7/24; C09J 7/38; C09J 153/00; C09J 153/02**

(86) International application number:
**PCT/JP2021/046427**

(87) International publication number:
**WO 2022/138420 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2020 JP 2020215731**

(71) Applicant: **Kuraray Co., Ltd.**
**Kurashiki-shi, Okayama 710-0801 (JP)**

(72) Inventors:
- **AKAI, Makoto**
  **Tsukuba-shi, Ibaraki 305-0841 (JP)**
- **TAKASAKI, Tomoe**
  **Tsukuba-shi, Ibaraki 305-0841 (JP)**
- **KAWAHARA, Moe**
  **Tsukuba-shi, Ibaraki 305-0841 (JP)**
- **ONO, Tomohiro**
  **Tsukuba-shi, Ibaraki 305-0841 (JP)**

(74) Representative: **Müller-Boré & Partner**
**Patentanwälte PartG mbB**
**Friedenheimer Brücke 21**
**80639 München (DE)**

(54) **LAMINATE INCLUDING ADHESIVE LAYER FORMED OF ACRYLIC ADHESIVE AGENT COMPOSITION**

(57)      A laminate is provided that has an adhesive layer including a composition containing an acrylic block copolymer, the adhesive layer being so designed that it has a small change in adhesive force over time. The laminate includes an adhesive layer (B) including an acrylic adhesive composition (Z), and a substrate layer (A) including a polyolefin resin (a), the acrylic adhesive composition (Z) including an acrylic block copolymer (I) having one or more polymer blocks (b1) containing an acrylic acid ester-derived structural unit, and one or more polymer blocks (b2) containing a methacrylic acid ester-derived structural unit, the polymer block (b1) containing a structural unit derived from an acrylic acid ester (b1-1) represented by the general formula (1) $CH_2=CH\text{-}COOR^1$ (wherein $R^1$ denotes a C7-C12 organic group).

**Description**

Technical Field

The present invention relates to a laminate that includes an adhesive layer including an acrylic adhesive composition.

Background Art

Compositions including acrylic polymers, in particular, acrylic block copolymers, have excellent heat resistance and weather resistance, exhibit excellent adhesive characteristics, and are also excellent in hot-melt applicability. Laminates having an adhesive layer including such a composition are being studied for use as, for example, adhesive sheets and adhesive tapes.

For example, studies are underway on coextruded laminates that include a polyolefin resin composition layer and an adhesive layer which includes an acrylic adhesive composition preferably containing an acrylic block copolymer (see, for example, Patent Literature 1).

Furthermore, laminates are studied that include a substrate layer including a polyolefin resin, an intermediate layer including a maleic anhydride-modified polyethylene resin, and an adhesive layer including an adhesive composition containing an acrylic block copolymer (I) (see, for example, Patent Literature 2).

Tackifier resins that are used in acrylic adhesive compositions containing acrylic block copolymers are often selected from highly polar tackifier resins to benefit from their high compatibility (see, for example, Patent Literature 3). Unfortunately, many of such tackifier resins are relatively expensive and tend to increase the costs of the compositions.

Citation List

Patent Literature

Patent Literature 1: JP-A-2014-125511
Patent Literature 2: JP-A-2016-160303
Patent Literature 3: JP-A-2017-203172

Summary of Invention

Technical Problem

The laminates described above, for example, adhesive sheets or adhesive films, are used as, for example, surface protective films, resealable packaging laminate films or other types of films. In these cases, the laminates are necessarily peeled from the adherends to which they have been applied.

Unfortunately, the currently known laminates that have an adhesive layer including a composition containing an acrylic block copolymer sometimes encounter a problem in which the adhesive layer changes its adhesive force over time and exhibits a varied level of peel strength depending on the lapse of time. In other cases, the adhesive layer sometimes lowers the adhesion with respect to the substrate layer, and thus the laminate often requires an intermediate layer. Furthermore, the cost of the composition tends to be high.

The present invention has been made in view of the circumstances discussed above. It is therefore an object of the present invention to provide a laminate that has an adhesive layer including a composition containing an acrylic block copolymer, the adhesive layer being so designed that it has a small change in adhesive force over time, exhibits high adhesion between the adhesive layer and the substrate layer, and is producible with a low composition cost.

Solution to Problem

A summary of the present invention resides in the following [1] to [5].

[1] A laminate comprising an adhesive layer (B) including an acrylic adhesive composition (Z), and a substrate layer (A) including a polyolefin resin (a), the acrylic adhesive composition (Z) comprising an acrylic block copolymer (I) having one or more polymer blocks (b1) containing an acrylic acid ester-derived structural unit, and one or more polymer blocks (b2) containing a methacrylic acid ester-derived structural unit, the polymer block (b1) containing a structural unit derived from an acrylic acid ester (b1-1) represented by the general formula (1) $CH_2=CH-COOR^1$ (wherein $R^1$ denotes a C7-C12 organic group).

[2] The laminate described in [1], wherein the acrylic block copolymer (I) has a weight average molecular weight (Mw) of 65,000 to 300,000.

[3] The laminate described in [1] or [2], wherein the acrylic adhesive composition (Z) comprises a tackifier resin (P).

[4] The laminate described in [3], wherein the tackifier resin (P) comprises at least one selected from the group consisting of rosin compounds, terpene compounds, and hydrocarbon resins.

[5] The laminate described in any of [1] to [4], wherein the acrylic adhesive composition (Z) comprises a styrenic thermoplastic elastomer (Q).

Advantageous Effects of Invention

The laminate provided according to the present invention has an adhesive layer including a composition containing an acrylic block copolymer. In the laminate, the adhesive layer has a small change in adhesive force over time, exhibits high adhesion between the adhesive layer and the substrate layer, and is producible with a low composition cost.

Description of Embodiments

In the present specification, "(meth)acrylic acid ester" means "methacrylic acid ester" or "acrylic acid ester"; "(meth)acrylic" means "methacrylic" or "acrylic"; and "(meth)acryloyl" means "acryloyl" or "methacryloyl".

[Acrylic adhesive compositions (Z)]

An acrylic adhesive composition (Z) used in the present invention includes an acrylic block copolymer (I) described below.

<Acrylic block copolymers (I)>

The acrylic block copolymer (I) has one or more polymer blocks (b1) containing an acrylic acid ester-derived structural unit, and one or more polymer blocks (b2) containing a methacrylic acid ester-derived structural unit. The polymer block (b1) contains a structural unit derived from an acrylic acid ester (b1-1) represented by the general formula (1) $CH_2=CH-COOR^1$ (wherein $R^1$ denotes a C7-C12 organic group).

[Polymer blocks (b1)]

The polymer block (b1) contains a structural unit derived from an acrylic acid ester (b1-1) represented by the general formula (1) $CH_2=CH-COOR^1$ (wherein $R^1$ denotes a C7-C12 organic group).

Examples of the C7-C12 organic groups represented by $R^1$ include C7-C12 alkyl groups, such as ethylhexyl group, octyl group, decyl group, isobornyl group, and lauryl group; C7-C12 aromatic ring groups, such as benzyl group; and organic groups having a total number of carbon atoms of 7 to 12 and containing an element other than carbon, for example, oxygen, such as phenoxyethyl group.

Examples of the acrylic acid esters (b1-1) include acrylic acid esters having no functional groups, such as 2-ethylhexyl acrylate, n-octyl acrylate, isooctyl acrylate, decyl acrylate, isobornyl acrylate, lauryl acrylate, and benzyl acrylate; and acrylic acid esters having a functional group, such as phenoxyethyl acrylate.

Among the acrylic acid esters (b1-1), acrylic acid esters having no functional groups are preferable because the phase separation between the polymer block (b1) and the polymer block (b2) becomes clearer and the acrylic adhesive composition (Z) exhibits a high cohesion force. 2-Ethylhexyl acrylate, n-octyl acrylate, isooctyl acrylate, and benzyl acrylate are more preferable. Furthermore, 2-ethylhexyl acrylate is more preferable because the acrylic adhesive composition (Z) that is obtained exhibits stable durability in a wide range of temperatures.

In a preferred embodiment, the acrylic acid ester that forms the polymer block (b1) consists solely of the acrylic acid ester (b1-1). When the acrylic acid ester that forms the polymer block (b1) consists solely of the acrylic acid ester (b1-1), the acrylic adhesive composition (Z) that is obtained can attain a smaller change in adhesive force over time, can achieve higher adhesion between the substrate layer and the adhesive layer, and can incorporate an inexpensive tackifier resin. Furthermore, such an adhesive layer may be peeled from an adherend (for example, a polar resin, such as polymethyl methacrylate (PMMA)) with less adhesive residue.

The acrylic acid esters described above may be used singly, or two or more may be used in combination. The content of the acrylic acid ester-derived structural units in the polymer block (b1) is preferably 60 mass% or more, more preferably 80 mass% or more, and still more preferably 90 mass% or more, and may be 100 mass%.

The glass transition temperature of the polymer block (b1) is preferably -100 to 30°C, more preferably -80 to 10°C, still more preferably -70 to 0°C, and most preferably -60 to -10°C. When the glass transition temperature is in this range, the acrylic adhesive composition (Z) that is obtained can attain excellent bond strength at room temperature.

[Polymer blocks (b2)]

The polymer block (b2) contains a methacrylic acid ester-derived structural unit. Examples of the methacrylic acid esters include methacrylic acid esters having no functional groups, such as methyl methacrylate, ethyl methacrylate, isopropyl methacrylate, n-propyl methacrylate, n-butyl methacrylate, isobutyl methacrylate, sec-butyl methacrylate, tert-butyl methacrylate, n-hexyl methacrylate, cyclohexyl methacrylate, 2-ethylhexyl methacrylate, n-octyl methacrylate, lauryl methacrylate, tridecyl methacrylate, stearyl methacrylate, isobornyl methacrylate, phenyl methacrylate, and benzyl methacrylate; and methacrylic acid esters having a functional group, such as methoxyethyl methacrylate, ethoxyethyl methacrylate, diethylaminoethyl methacrylate, 2-hydroxyethyl methacrylate, 2-aminoethyl methacrylate, glycidyl methacrylate, and tetrahydrofurfuryl methacrylate.

Among those described above, methacrylic acid esters having no functional groups are preferable from the point of view of enhancing the heat resistance and the durability of the acrylic adhesive composition (Z) that is obtained, with methyl methacrylate, ethyl methacrylate, tert-butyl methacrylate, cyclohexyl methacrylate, 2-ethylhexyl methacrylate, isobornyl methacrylate, phenyl methacrylate, and benzyl methacrylate being more preferable. Methyl methacrylate is still more preferable because the phase separation between the polymer block (b1) and the polymer block (b2) becomes clearer and the acrylic adhesive composition (Z) exhibits good mechanical properties. The polymer block (b2) may be composed of a single kind of methacrylic acid ester, or may be composed of two or more kinds of methacrylic acid esters. To enhance the adhesive durability, it is preferable that the acrylic block copolymer (I) have two or more polymer blocks (b2). In this case, the polymer blocks (b2) may be the same as or different from one another.

The glass transition temperature of the polymer block (b2) is preferably 80 to 140°C, more preferably 90 to 130°C, and still more preferably 100 to 120°C. When the glass transition temperature is in this range, the polymer block (b2) acts as physical pseudo-crosslinking sites at a usual service temperature of the acrylic adhesive composition (Z) to offer excellent bond strength, durability, and heat resistance.

The polymer block (b1) may contain a structural unit derived from a methacrylic acid ester as long as the advantageous effects of the present invention are not impaired, and the polymer block (b2) may contain a structural unit derived from an acrylic acid ester as long as the advantageous effects of the present invention are not impaired. Where necessary, these polymer blocks may contain a structural unit derived from a monomer other than (meth)acrylic acid esters. Examples of such additional monomers include vinyl monomers having a carboxyl group, such as (meth)acrylic acid, crotonic acid, maleic acid, and fumaric acid; aromatic vinyl monomers, such as styrene, α-methylstyrene, p-methylstyrene, and m-methylstyrene; conjugated diene monomers, such as butadiene and isoprene; olefin monomers, such as ethylene, propylene, isobutene, and octene; lactone monomers, such as ε-caprolactone and valerolactone; (meth)acrylamide, (meth)acrylonitrile, maleic anhydride, vinyl acetate, vinyl chloride, and vinylidene chloride. When these monomers are used, the amount is preferably 40 mass% or less, more preferably 20 mass% or less, and still more preferably 10 mass% or less relative to the total mass of the monomers used in each polymer block.

Where necessary, the acrylic block copolymer (I) used in the present invention may have an additional polymer block in addition to the polymer block (b1) and the polymer block (b2). Examples of such additional polymer blocks include polymer blocks or copolymer blocks that contain a structural unit derived from such a monomer as styrene, α-methylstyrene, p-methylstyrene, m-methylstyrene, acrylonitrile, methacrylonitrile, ethylene, propylene, isobutene, butadiene, isoprene, octene, vinyl acetate, maleic anhydride, vinyl chloride, or vinylidene chloride; and polymer blocks including polyethylene terephthalate, polylactic acid, polyurethane, or polydimethylsiloxane. Examples of the polymer blocks further include hydrogenated products of polymer blocks that contain a structural unit derived from a conjugated diene, such as butadiene or isoprene.

The acrylic block copolymer (I) is preferably represented by any of the general formulas below in which b1 denotes a polymer block (b1), b1' denotes a polymer block (b1) that has a different structure from the above polymer block (b1) (but is not a polymer block (b2)), b2 denotes a polymer block (b2), and b2' denotes a polymer block (b2) that has a different structure from the above polymer block (b2) (but is not a polymer block (b1)):

$$(b2-b1)_n$$

$$(b2-b1)_n-b2$$

$$b1-(b2-b1)_n$$

$$(b2-b1)_n-b1'$$

$$(b2-b1)_n-b2'$$

$$(b2-b1)_n-Z$$

$$(b1-b2)_n-Z$$

(In the formulas, n is an integer of 1 to 30, Z is a coupling site (a coupling site resulting from the formation of a chemical bond by the reaction of the polymer end with a coupling agent), and - indicates a bond between the polymer blocks. When the formula includes a plurality of polymer blocks b1 and a plurality of polymer blocks b2, the polymer blocks may have the same structures or different structures.) Here, the term "different structures" means that the structures differ from one another in at least one of the types of monomer units forming the polymer blocks, the molecular weights, the molecular weight distributions, the stereoregularities, and, when the polymer blocks each have a plurality of types of monomer units, the ratios of the monomer units and the types of copolymerization (random, gradient, or block).

The value of n is preferably 1 to 15, more preferably 1 to 8, and still more preferably 1 to 4. Among the above structures, a linear block copolymer represented by $(b2-b1)_n$, $(b2-b1)_n-b2$, $b1-(b2-b1)_n$, or $(b2-b1)_n-b1'$ is preferable for the reason that the acrylic adhesive composition (Z) attains excellent durability. A diblock copolymer represented by b2-b1; a triblock copolymer having the polymer block (b2), the polymer block (b1), and the polymer block (b1') in this order, that is, represented by the formula: b2-b1-b1'; a triblock copolymer having the polymer block (b2), the polymer block (b1), and the polymer block (b2) in this order, that is, represented by the formula: b2-b1-b2; and a triblock copolymer having the polymer block (b2), the polymer block (b1), and the polymer block (b2') in this order, that is, represented by the formula: b2-b1-b2' are more preferable. These may be used singly, or two or more may be used in combination.

In the present invention, a mixture of a diblock copolymer and a triblock copolymer is also preferable. In this case, the mixture is more preferably one that includes a triblock copolymer represented by b2-b1-b1' and a diblock copolymer represented by b2-b1, or one that includes a triblock copolymer represented by b2-b1-b2 and a diblock copolymer represented by b2-b1, and is still more preferably one that includes a triblock copolymer represented by b2-b1-b2 and a diblock copolymer represented by b2-b1.

To further reduce the over-time change in adhesive force of the adhesive layer in the laminate of the present invention, the weight average molecular weight (Mw) of the acrylic block copolymer (I) is preferably 50,000 to 300,000, and more preferably 65,000 to 300,000. In particular, the Mw is more preferably 70,000 to 290,000, and still more preferably 90,000 to 280,000 in order to ensure that the acrylic adhesive composition (Z) that is obtained has good fluidity. When the acrylic adhesive composition (Z) includes two or more kinds of acrylic block copolymers (I), it is preferable that the Mw of at least one acrylic block copolymer (I) be in the above range.

The molecular weight distribution (Mw/Mn) of the acrylic block copolymer (I) is preferably 1.00 to 1.55. The Mw/Mn is more preferably 1.00 to 1.50, still more preferably 1.00 to 1.45, and further preferably 1.00 to 1.40 to ensure that the acrylic adhesive composition (Z) attains excellent durability. When the acrylic adhesive composition (Z) includes two or more kinds of acrylic block copolymers (I), it is preferable that the Mw/Mn of at least one acrylic block copolymer (I) be in the above range, and it is more preferable that all the acrylic block copolymers (I) have Mw/Mn in the above range.

The number average molecular weight (Mn) and the weight average molecular weight (Mw) of the acrylic block copolymers (I) are values measured by gel permeation chromatography relative to standard polystyrenes. The molecular weight distribution (Mw/Mn) is a value calculated from the values of Mw and Mn.

The content of the polymer block (b1) in the acrylic block copolymer (I) is preferably 70 to 96 mass%. When the content of the polymer block (b1) is in the above range, the acrylic adhesive composition (Z) becomes flexible and exhibits higher bond strength with respect to a substrate including a highly polar resin, such as a PMMA plate. From the point of view of imparting flexibility, the content of the polymer block (b1) is more preferably 72 to 95 mass%, and still more preferably 74 to 94 mass%. When the acrylic adhesive composition (Z) of the present invention includes two or more kinds of acrylic block copolymers (I), it is preferable that the content of the polymer block (b1) be in the above range for at least one acrylic block copolymer (I), and it is more preferable that the content of the polymer block (b1) be in the above range for all the acrylic block copolymers (I).

The content of the polymer block (b2) in the acrylic block copolymer (I) is preferably 4 to 30 mass%. When the content of the polymer block (b2) is in the above range, a surface protective film that includes the laminate obtained in the present invention attains improved unrolling force and exhibits higher bond strength with respect to a PMMA plate. To enhance the unrolling force, the content of the polymer block (b2) is more preferably 5 to 28 mass%, and still more preferably 6 to 26 mass%. When the acrylic adhesive composition (Z) includes two or more kinds of acrylic block copolymers (I), it is preferable that the content of the polymer block (b2) be in the above range for at least one acrylic block copolymer (I), and it is more preferable that the content of the polymer block (b2) be in the above range for all the acrylic block copolymers (I). The contents of the polymer block (b1) and the polymer block (b2) may be determined by $^1$H-NMR, specifically, may be determined by the method described in Examples.

[Methods for producing acrylic block copolymers (I)]

The acrylic block copolymer (I) may be produced by any method without limitation in accordance with a known technique as long as the polymer that is obtained satisfies the conditions described hereinabove. In general, a block copolymer with a narrow molecular weight distribution is obtained by living polymerization of monomers that will form constituent units. Examples of the living polymerization processes include living polymerization using an organic rare earth metal complex as a polymerization initiator (see JP-AH06-93060), living anionic polymerization performed with an organic alkali metal compound as a polymerization initiator in the presence of a mineral acid salt, such as an alkali metal or alkaline earth metal salt (see JP-A-H05-507737), living anionic polymerization performed with an organic alkali metal compound as a polymerization initiator in the presence of an organoaluminum compound (see JP-A-H11-335432), and atom transfer radical polymerization (ATRP) (see Macromolecular Chemistry and Physics, 2000, vol. 201, pp. 1108-1114) .

Among those production processes described above, living anionic polymerization performed with an organic alkali metal compound as a polymerization initiator in the presence of an organoaluminum compound is advantageous in that the obtainable block copolymer has high transparency and is less odorous because of little residual monomers, and also in that few bubbles are generated during shaping of the acrylic adhesive composition (Z). Another advantage is that the methacrylic acid ester polymer block has a highly syndiotactic molecular structure, and the heat resistance of the acrylic adhesive composition (Z) that is obtained is effectively increased.

The content of the acrylic block copolymer (I) in the acrylic adhesive composition (Z) is preferably 40 mass% or more and 100 mass% or less, and more preferably 50 mass% or more and 100 mass% or less. The content of the acrylic block copolymer (I) in the acrylic adhesive composition (Z) is preferably 60 mass% or more and 100 mass% or less, and more preferably 70 mass% or more and 100 mass% or less.

When the content of the acrylic block copolymer (I) in the acrylic adhesive composition (Z) is in the above range, the adhesive layer exhibits good adhesion with respect to a substrate layer (A) including a polyolefin resin (a) and has a small change in adhesive force (does not significantly increase the adhesive force) with respect to an adherend over time.

When the acrylic adhesive composition (Z) further includes a styrenic thermoplastic elastomer (Q) described later as a polymer component, the content of the acrylic block copolymer (I) is preferably 1 mass% or more and 40 mass% or less, and more preferably 5 mass% or more and 40 mass% or less.

When the content of the acrylic block copolymer (I) in the acrylic adhesive composition (Z) is in the above range, the compatibility with the styrenic thermoplastic elastomer (Q) is enhanced, and the adhesive layer has a small change in adhesive force (does not significantly increase the adhesive force) with respect to an adherend over time.

When the acrylic adhesive composition (Z) of the present invention includes two or more kinds of acrylic block copolymers (I), it is preferable that the total content thereof be in the above range.

<Tackifier resins (P)>

The acrylic adhesive composition (Z) may contain a tackifier resin (P) to enhance the adhesive power with respect to a substrate layer (A) in the laminate of the present invention and to enhance adhesion properties with respect to an adherend. Typical examples of the tackifier resins (P) include rosin compounds, terpene compounds, and hydrocarbon resins. Specific examples of the tackifier resins (P) include rosin compounds, such as natural rosins, modified rosins, natural rosin glycerol esters, modified rosin glycerol esters, natural rosin pentaerythritol esters, modified rosin pentaerythritol esters, hydrogenated rosins, hydrogenated rosin pentaerythritol esters, and hydrogenated rosin glycerol esters; terpene compounds, such as natural terpene copolymers, natural terpene terpolymers, aromatic-modified terpene resins, hydrogenated derivatives of aromatic-modified terpene resins, terpene phenolic resins, hydrogenated derivatives of terpene phenolic resins, terpene resins (including monoterpene, diterpene, triterpene, and polypertene), and hydrogenated terpene resins; and hydrocarbon resins, such as aliphatic petroleum hydrocarbon resins (C5 resins), hydrogenated derivatives of aliphatic petroleum hydrocarbon resins, aromatic petroleum hydrocarbon resins (C9 resins) including styrene oligomers, hydrogenated derivatives of aromatic petroleum hydrocarbon resins, dicyclopentadiene resins, hydrogenated derivatives of dicyclopentadiene resins, C5/C9 copolymer resins, hydrogenated products of C5/C9 copolymer resins, cyclic aliphatic petroleum hydrocarbon resins, and hydrogenated products of cyclic aliphatic petroleum hydrocarbon resins. Among those tackifier resins (P), rosin compounds, aliphatic petroleum hydrocarbon resins, aromatic petroleum hydrocarbon resins, C5/C9 copolymer resins, cyclic aliphatic petroleum hydrocarbon resins, and hydrogenated products thereof are preferable. Rosin compounds, aliphatic petroleum hydrocarbon resins, aromatic petroleum hydrocarbon resins, C5/C9 copolymer resins, and hydrogenated products thereof are more preferable.

The tackifier resins (P) may be used singly, or two or more may be used in combination.

When the acrylic adhesive composition (Z) contains the tackifier resin (P), the content of the tackifier resin (P) is preferably 0.1 to 60 parts by mass, and more preferably 3 to 50 parts by mass with respect to 100 parts by mass of the total of the acrylic block copolymer (I) and the tackifier resin (P) in order to ensure that the composition exhibits good fluidity in the formation of the adhesive layer (B) or in the stacking of the adhesive layer (B) and a substrate layer (A), and also to ensure that the adhesive layer (B) attains enhanced adhesion properties with respect to the substrate layer and also with respect to an adherend. From the similar viewpoint, the content of the tackifier resin (P) is preferably 1 to 35 parts by mass, and more preferably 5 to 25 parts by mass with respect to 100 parts by mass of the total of the acrylic block copolymer (I) and the tackifier resin (P).

When the acrylic adhesive composition (Z) includes the styrenic thermoplastic elastomer (Q), the content of the tackifier resin (P) is preferably 1 to 49 parts by mass, and more preferably 5 to 40 parts by mass with respect to 100 parts by mass of the total of the acrylic block copolymer (I), the styrenic thermoplastic elastomer (Q), and the tackifier resin (P) in order to ensure that the composition exhibits good fluidity in the formation of the adhesive layer (B) or in the stacking of the adhesive layer (B) and a substrate layer (A), and also to ensure that the adhesive layer (B) attains enhanced adhesion properties with respect to the substrate layer and also with respect to an adherend.

<Styrenic thermoplastic elastomers (Q)>

The acrylic adhesive composition (Z) used in the present invention may further include a styrenic thermoplastic elastomer (Q).

The styrenic thermoplastic elastomer (Q) is a block copolymer (Q1), or a hydrogenated product thereof, that has one or more polymer blocks (q11) containing an aromatic vinyl compound-derived structural unit, and one or more polymer blocks (q12) containing a conjugated diene-derived structural unit. The styrenic thermoplastic elastomer (Q) may comprise a single, or two or more kinds of block copolymers (Q1) or hydrogenated products thereof.

[Polymer blocks (q11)]

The polymer block (q11) contained in the block copolymer (Q1) contains an aromatic vinyl compound-derived structural unit. Examples of the aromatic vinyl compounds include styrene, $\alpha$-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene, and divinylbenzene. The aromatic vinyl compounds may be used singly, or two or more may be used in combination. Among those described above, styrene, $\alpha$-methylstyrene, and 4-methylstyrene are preferable, and styrene is more preferable.

The polymer block (q11) may contain a structural unit derived from a monomer other than the aromatic vinyl compound, for example, a structural unit derived from such an additional monomer as a conjugated diene for constituting the polymer block (q12) described later. The content of the aromatic vinyl compound-derived structural units in the polymer block (q11) is preferably 60 mass% or more, more preferably 70 mass% or more, still more preferably 80 mass% or more, further preferably 90 mass% or more, and particularly preferably 100 mass%.

[Polymer blocks (q12)]

The polymer block (q12) contained in the block copolymer (Q1) contains a conjugated diene-derived structural unit. Examples of the conjugated dienes include butadiene, isoprene, 2,3-dimethyl-butadiene, 2-phenyl-butadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, farnesene, and chloroprene. The conjugated dienes may be used singly, or two or more may be used in combination. Among those described above, butadiene, isoprene, and farnesene are preferable.

The polymer block (q12) may contain a structural unit derived from a monomer other than the conjugated diene, for example, a structural unit derived from such an additional monomer as an aromatic vinyl compound for constituting the polymer block (q11) described hereinabove. The content of the conjugated diene-derived structural units in the polymer block (q12) is preferably 60 mass% or more, more preferably 70 mass% or more, still more preferably 80 mass% or more, further preferably 90 mass% or more, and particularly preferably 100 mass%.

The manner in which the polymer blocks (q11) and the polymer blocks (q12) are bonded in the block copolymer (Q1) is not particularly limited and may be linear, branched, radial, or a combination of two or more thereof. In particular, the blocks are preferably bonded linearly to one another. The manner of bonding is preferably represented by (q11-

q12)$_l$, q11-(q12-q11)$_m$, or q12-(q11-q12)$_n$ in which q11 indicates the polymer block (q11) and q12 indicates the polymer block (q12). The letters l, m, and n each independently indicate an integer of 1 or greater.

From points of view such as adhesive force, shaping processability, and handleability, the manner of bonding in the block copolymer (Q1) preferably has blocks in the order of polymer block (q11), polymer block (q12), and polymer block (q11) (the polymer block (q12) is sandwiched between two polymer blocks (q11)) (represented by q11-q12-q11). From the point of view of fluidity, the styrenic thermoplastic elastomer (Q) may be a mixture of a triblock copolymer represented by q11-q12-q11 and a diblock copolymer represented by q11-q12, or may be a hydrogenated product thereof. In this case, the mass ratio of the hydrogenated product of the triblock copolymer to the hydrogenated product of the diblock copolymer is usually 99:1 to 1:99, preferably 85:15 to 15:85, more preferably 80:20 to 20:80, and still more preferably 75:25 to 25:75.

When the block copolymer (Q1) has two or more polymer blocks (q11), the polymer blocks (q11) may be polymer blocks including the same structural units, or may be polymer blocks including different structural units. Similarly, when the block copolymer (Q1) has two or more polymer blocks (q12), the polymer blocks may be polymer blocks including the same structural units, or may be polymer blocks including different structural units. In the case of, for example, a triblock copolymer represented by q11-q12-q11, the two polymer blocks (q11) may be identical or different in the type of the aromatic vinyl compound.

The content of the polymer block (q11) in the block copolymer (Q1) is preferably 3 to 45 mass%. When the content of the polymer block (q11) is in the above range, the adhesive composition that is obtained has excellent bond strength and excellent shaping properties. To attain further enhancements in bond strength and shaping properties, the content of the polymer block (q11) is more preferably 4 to 35 mass%, still more preferably 5 to 30 mass%, and further preferably 6 to 25 mass%. When the styrenic thermoplastic elastomer (Q) comprises two or more kinds of block copolymers (Q1) or hydrogenated products thereof, it is preferable that the content of the polymer block (q11) be in the above range for at least one block copolymer (Q1), and it is more preferable that the content of the polymer block (q11) be in the above range for all the block copolymers (Q1).

The content of the polymer block (q12) in the block copolymer (Q1) is preferably 55 to 97 mass%, more preferably 65 to 96 mass%, still more preferably 70 to 95 mass%, and further preferably 75 to 94 mass%. When the styrenic thermoplastic elastomer (Q) comprises two or more kinds of block copolymers (Q1) or hydrogenated products thereof, it is preferable that the content of the polymer block (q12) be in the above range for at least one block copolymer (Q1), and it is more preferable that the content of the polymer block (q12) be in the above range for all the block copolymers (Q1).

In the present specification, when polymer blocks of the same type are bonded linearly to each other via, for example, a divalent coupling agent, the whole of the polymer blocks bonded to each other is regarded as one polymer block. According to this, the whole of polymer blocks that should be described as q11-X-q11 in a strict sense (X denotes a coupling agent residue) is written as q11. Because such polymer blocks including a coupling agent residue are regarded as described above in the present specification, for example, a block copolymer that contains a coupling agent residue and should be described as q11-q12-X-q12-q11 in a strict sense is written as q11-q12-q11 and is regarded as a triblock copolymer.

The total content of the polymer block (q11) and the polymer block (q12) in the block copolymer (Q1) is preferably 80 mass% or more, more preferably 90 mass% or more, still more preferably 95 mass% or more, and further preferably 100 mass%.

The styrenic thermoplastic elastomer (Q) may comprise an unhydrogenated block copolymer (Q1) or may comprise a hydrogenated block copolymer (Q1). To attain enhancements in heat resistance and weather resistance, the styrenic thermoplastic elastomer (Q) preferably comprises a hydrogenated block copolymer (Q1) resulting from hydrogenation of at least part of the carbon-carbon double bonds in the polymer block (q12).

From the points of view of heat resistance and weather resistance, the hydrogenation ratio of the carbon-carbon double bonds in the polymer block (q12) is preferably 50 to 100 mol%, more preferably 70 to 100 mol%, still more preferably 75 to 100 mol, further preferably 80 to 100 mol%, still further preferably 85 to 100 mol%, and particularly preferably 90 to 100 mol%. When the styrenic thermoplastic elastomer (Q) comprises two or more kinds of hydrogenated products of the block copolymers (Q1), it is preferable that the hydrogenation ratio of the whole mixture of the hydrogenated products be in the above range, and it is more preferable that the hydrogenation ratio of all the hydrogenated products of the block copolymers (Q1) be in the above range.

The hydrogenation ratio may be calculated by $^1$H-NMR measurement of the block copolymer (Q1) and the hydrogenated product of the block copolymer (Q1) after hydrogenation.

From the point of view of shaping processability, the number average molecular weight (Mn) of the block copolymer (Q1) or the hydrogenated product thereof is preferably 50,000 or more, more preferably 60,000 or more, and still more preferably 70,000 or more, and is preferably 300,000 or less, more preferably 250,000 or less, and still more preferably 180,000 or less. When the styrenic thermoplastic elastomer (Q) comprises two or more kinds of block copolymers (Q1) or hydrogenated products thereof, it is preferable that the Mn be in the above range for at least one block copolymer (Q1) or hydrogenated product thereof, and it is more preferable that the Mn be in the above range for all the block copolymers (Q1) or the hydrogenated products thereof.

The molecular weight distribution (Mw/Mn) of the block copolymer (Q1) or the hydrogenated product thereof is preferably 1 to 6, more preferably 1 to 4, still more preferably 1 to 3, further preferably 1 to 2, and particularly preferably 1 to 1.3. When the molecular weight distribution is in the above range, the block copolymer (Q1) or the hydrogenated product thereof has a small variation in viscosity and is easy to handle. When the styrenic thermoplastic elastomer (Q) comprises two or more kinds of block copolymers (Q1) or hydrogenated products thereof, it is preferable that the Mw/Mn be in the above range for at least one block copolymer (Q1) or hydrogenated product thereof, and it is more preferable that the Mw/Mn be in the above range for all the block copolymers (Q1) or the hydrogenated products hereof.

The number average molecular weight (Mn) and the weight average molecular weight (Mw) of the block copolymers (Q1) or the hydrogenated products thereof are values measured by gel permeation chromatography relative to standard polystyrenes. The molecular weight distribution (Mw/Mn) is a value calculated from the values of Mw and Mn.

In addition to the polymer block (q11) and the polymer block (q12), the block copolymer (Q1) may contain a polymer block composed of an additional monomer as long as the advantageous effects of the present invention are not impaired.

Examples of such additional monomers include unsaturated hydrocarbon compounds, such as propylene, 1-butene, 1-pentene, 4-methyl-1-pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, and 1-eicosene; and functional group-containing unsaturated compounds, such as acrylic acid, methacrylic acid, methyl acrylate, methyl methacrylate, acrylonitrile, methacrylonitrile, maleic acid, fumaric acid, crotonic acid, itaconic acid, 2-acryloylethanesulfonic acid, 2-methacryloylethanesulfonic acid, 2-acrylamido-2-methylpropanesulfonic acid, 2-methacrylamido-2-methylpropanesulfonic acid, vinylsulfonic acid, vinyl acetate, and methyl vinyl ether. These may be used singly, or two or more may be used in combination.

When the block copolymer (Q1) has such an additional polymer block, the content thereof is preferably 20 mass% or less, more preferably 10 mass% or less, and still more preferably 5 mass%.

[Methods for producing block copolymers (Q1) or hydrogenated products thereof]

For example, the block copolymer (Q1) may be suitably produced by a production method that includes a polymerization step in which the block copolymer (Q1) is obtained by anionic polymerization.

The hydrogenated product of the block copolymer (Q1) may be suitably produced by a production method that includes the above polymerization step and a step in which carbon-carbon double bonds in the polymer block (q12) in the block copolymer (Q1) are hydrogenated.

(Polymerization step)

The block copolymer (Q1) may be produced by a solution polymerization process or, for example, the process described in JP-A-2012-502135 or JP-A-2012-502136. In particular, a solution polymerization process is preferable. For example, a known process, such as an ionic polymerization process, for example, anionic polymerization or cationic polymerization, or a radical polymerization process may be used. Among those described above, an anionic polymerization process is preferable. In a preferred anionic polymerization process, monomers including an aromatic vinyl compound and a conjugated diene may be added sequentially to a solvent, typically a hydrocarbon, in the presence of a Lewis base as required, typically an ether compound or a tertiary amine, using an anionic polymerization initiator, typically an organic alkali metal, thereby producing a block copolymer (Q1) .

The polymerization reaction may be terminated by adding an alcohol, such as methanol or isopropanol, as a polymerization terminator. The block copolymer (Q1) may be isolated by pouring the polymerization reaction solution obtained into a poor solvent, such as methanol, to precipitate the block copolymer (Q1), or by washing the polymerization reaction solution with water, followed by separation and drying.

Alternatively, the block copolymer (Q1) may be produced by a method in which polymer blocks including a polymer block (q11) and a polymer block (q12) are polymerized in this order, and ends of the polymer blocks (q12) are coupled with a coupling agent, typically a halogenated silane compound.

The block copolymer (Q1) may be modified. Examples of the functional groups that may be introduced include amino groups, alkoxysilyl groups, hydroxyl groups, epoxy groups, carboxyl groups, carbonyl groups, mercapto groups, isocyanate groups, and acid anhydride groups. When a hydrogenated product of the block copolymer (Q1) is to be used as the styrenic thermoplastic elastomer (Q), it is desirable to perform the modification before a hydrogenation step described later.

For example, the block copolymer may be modified by a method in which a coupling agent, typically tin tetrachloride, that is capable of reacting with the active polymer ends, a polymer end modifier, typically 4,4'-bis(diethylamino)benzophenone, or a modifier described in JP-A-2011-132298 is added before the addition of the polymerization terminator. Alternatively, a method may be adopted in which the isolated copolymer is grafted with, for example, maleic anhydride.

When a hydrogenated product of the block copolymer (Q1) is to be used as the styrenic thermoplastic elastomer (Q), it is desirable to perform the modification before a hydrogenation step described below.

(Hydrogenation step)

The hydrogenated product of the block copolymer (Q1) may be obtained by subjecting the block copolymer (Q1) or the modified block copolymer (Q1) obtained by the above-described method to a hydrogenation step. A known hydrogenation process may be used. For example, a Ziegler catalyst, a metallocene catalyst, or a hydrogenation catalyst, typically palladium carbon, may be added to a solution of the block copolymer (Q1) in a solvent that does not affect the hydrogenation reaction, and the hydrogenation reaction may be performed at an appropriate hydrogen pressure and an appropriate reaction temperature.

When the acrylic adhesive composition (Z) of the present invention includes the styrenic thermoplastic elastomer (Q), the content of the styrenic thermoplastic elastomer (Q) is preferably 50 mass% or more and 90 mass% or less, and more preferably 50 mass% or more and 80 mass% or less.

When the content of the styrenic thermoplastic elastomer (Q) in the acrylic adhesive composition (Z) is in the above range, the adhesive layer (B) attains a higher adhesion strength with respect to a substrate layer (A) including a polyolefin resin (a).

(Optional components)

Where necessary, the acrylic adhesive composition (Z) may contain optional components including softeners, oxidation inhibitors, inorganic fillers, additional thermoplastic polymers (except the acrylic block copolymers (I) and the styrenic thermoplastic elastomers (Q)), lubricants, light stabilizers, processing aids, colorants, such as pigments and coloring matters, flame retardants, antistatic agents, matting agents, silicon oils, antiblocking agents, UV absorbers, releasing agents, foaming agents, antibacterial agents, mildew-proofing agents, and fragrances, as long as the advantageous effects of the present invention are not impaired.

The optional components may be used singly, or two or more may be used in combination.

The softener may be added to the adhesive composition of the present invention for purposes, such as to impart additional flexibility. The softeners may be any softeners generally used for rubbers and plastics. Examples of the softeners include paraffinic, naphthenic, and aromatic process oils; phthalic acid derivatives, such as dioctyl phthalate and dibutyl phthalate; white oils; mineral oils; liquid ethylene-$\alpha$-olefin cooligomers; liquid paraffins; polybutenes; low-molecular polyisobutylenes; liquid polydienes, such as liquid polybutadiene, liquid polyisoprene, liquid polyisoprene-butadiene copolymer, liquid styrenebutadiene copolymer, and liquid styrene-isoprene copolymer; and hydrogenated products of these materials. Among those described above, paraffinic process oils; liquid ethylene-$\alpha$-olefin cooligomers; liquid paraffins; low-molecular polyisobutylenes; and hydrogenated products of these materials are preferable when the acrylic adhesive composition (Z) includes the styrenic thermoplastic elastomer (Q) from the point of view of compatibility with the styrenic thermoplastic elastomer (Q). Hydrogenated products of paraffinic process oils are more preferable.

The softeners may be used singly, or two or more may be used in combination.

Examples of the oxidation inhibitors include hindered phenolic oxidation inhibitors, phosphorus oxidation inhibitors, lactone oxidation inhibitors, and hydroxyl oxidation inhibitors. Among those described above, hindered phenolic oxidation inhibitors are preferable. The oxidation inhibitors may be used singly, or two or more may be used in combination.

The inorganic fillers may be added for the purposes of, for example, improving properties, such as heat resistance and weather resistance, of the adhesive composition of the present invention, controlling the hardness, and improving economic efficiency by serving as bulking fillers. Examples of the inorganic fillers include calcium carbonate, talc, magnesium hydroxide, aluminum hydroxide, mica, clay, natural silicic acid, synthetic silicic acid, titanium oxide, carbon black, barium sulfate, glass balloons, and glass fibers. The inorganic fillers may be used singly, or two or more may be used in combination.

For example, the melt viscosity of the acrylic adhesive composition (Z) may be designed to fall in an appropriate range in accordance with the method and the conditions (for example, temperature) for producing the acrylic adhesive composition. Furthermore, for example, the melt viscosity of the acrylic adhesive composition (Z) may be designed to fall in an appropriate range in accordance with the method and the conditions for producing a laminate of the present invention. When, for example, a laminate of the present invention is produced by a coextrusion method, the melt viscosity of the acrylic adhesive composition (Z) may be controlled so that the difference in melt viscosity at the laminate production temperature is small between a polyolefin resin (a) as a substrate layer (A) and the acrylic adhesive composition (Z). In this manner, a satisfactory laminate can be produced.

From the above viewpoint, the melt viscosity of the acrylic adhesive composition (Z) may be appropriately selected from the MFR (230°C, 2.16 kgf) range of 0.1 to 100 g/10 min or the MFR (190°C, 2.16 kgf) range of 1 to 250 g/10 min.

The MFR (230°C, 2.16 kgf) of the acrylic adhesive composition (Z) is preferably 0.1 to 100 g/10 min, more preferably 0.2 to 90 g/10 min, and still more preferably 0.3 to 80 g/10 min or less. When the MFR is in the above range, the acrylic adhesive composition (Z) tends to exhibit excellent film-forming properties in the fabrication of the adhesive layer (B).

The acrylic adhesive composition (Z) described above may be produced by any method without limitation as long as the method is such that the acrylic block copolymer (I) and, as required, the tackifier resin (P), the styrenic thermoplastic elastomer (Q), and the optional components can be mixed together uniformly. In particular, the acrylic adhesive composition (Z) is preferably produced by a melt-kneading method. For example, the melt-kneading may be performed using a melt-kneading device, such as a single-screw extruder, a twin-screw extruder, a kneader, a batch mixer, a roller, or a Banbury mixer. The acrylic adhesive composition (Z) may be preferably obtained by melt-kneading at 170 to 270°C.

The acrylic adhesive composition (Z) has excellent shaping properties, such as extrudability, and exhibits excellent adhesive bond strength even with respect to a highly polar material. Thus, the composition may be used in the form of a laminate that includes an adhesive layer including the acrylic adhesive composition (Z), and a substrate layer including a material other than the adhesive composition.

[Laminates]

A laminate of the present invention includes an adhesive layer (B) including the acrylic adhesive composition (Z), and a substrate layer (A) including a polyolefin resin (a). The laminate of the present invention may include two or more adhesive layers including an adhesive composition, and two or more substrate layers including a material other than the adhesive composition.

When the laminate includes two or more adhesive layers, one of these layers needs to be an adhesive layer (B) including the acrylic adhesive composition (Z). The adhesive layer or layers other than this layer may be adhesive layers including the acrylic adhesive composition (Z) or may be adhesive layers including other materials.

When the laminate includes two or more substrate layers, one of these layers needs to be a substrate layer (A) including a polyolefin resin (a). The substrate layer or layers other than this layer may be substrate layers including a polyolefin resin (a) or may be substrate layers including other materials.

The shape of the laminate is not particularly limited. Exemplary shapes include film shapes, sheet shapes, and tube shapes. In particular, film-shaped or sheet-shaped laminates are preferable.

The substrate layer(s) in the laminate includes a substrate layer (A) including a polyolefin resin (a).

Examples of the polyolefin resins (a) include polyethylene, polypropylene, polybutene-1, polyhexene-1, poly-3-methyl-butene-1, poly-4-methyl-pentene-1, copolymers of ethylene with one, or two or more C3-C20 $\alpha$-olefins (such as, for example, propylene, 1-butene, 1-pentene, 1-hexene, 1-heptene, 1-octene, 1-decene, 3-methyl-1-butene, 4-methyl-1-pentene, 6-methyl-1-heptene, isooctene, isooctadiene, and decadiene), ethylene-propylene-diene copolymer (EPDM), ethylene-vinyl acetate copolymer, and ethylene-acrylic acid copolymer.

Among these polyolefin resins (a), polyethylene and polypropylene are preferable, and polypropylene is particularly preferable.

The polyolefin resin (a) may be an unsaturated carboxylic anhydride-modified polyolefin resin obtained by modifying the above polyolefin resin with an unsaturated carboxylic anhydride (for example, maleic anhydride).

For example, some preferred unsaturated carboxylic anhydride-modified polyolefins are maleic anhydride-modified polyolefin resins obtained by modifying the above polyolefin resins with maleic anhydride, such as maleic anhydride-modified polyethylene, maleic anhydride-modified polypropylene, and maleic anhydride-modified polybutene-1. Among those described above, maleic anhydride-modified polyethylene and maleic anhydride-modified polypropylene are preferable, and maleic anhydride-modified polypropylene is particularly preferable.

Among the polyolefin resins (a), polyethylene, polypropylene, maleic anhydride-modified polyethylene, and maleic anhydride-modified polypropylene are preferable, and polypropylene and maleic anhydride-modified polypropylene are particularly preferable.

The polyolefin resins (a) may be used singly, or two or more may be used in combination.

From the point of view of obtaining a satisfactory laminate, in particular, from the point of view of obtaining a satisfactory laminate by a coextrusion method, the melt viscosity of the polyolefin resin (a) may be appropriately selected from the MFR (230°C, 2.16 kgf) range of 0.1 to 100 g/10 min or the MFR (190°C, 2.16 kgf) range of 1 to 250 g/10 min.

Furthermore, the MFR (230°C, 2.16 kgf) of the polyolefin resin (a) is preferably 1 to 50 g/10 min, more preferably 1.5 to 40 g/10 min, and still more preferably 2 to 30 g/10 min or less.

When the MFR is in the above range, enhanced film-forming properties may be obtained in the coextrusion of the polyolefin resin (a) and the acrylic adhesive composition (Z).

Where necessary, additives may be further added to the material for forming the substrate layer (A) while still achieving the object of the present invention. Examples of the additives include heat stabilizers, light stabilizers, UV absorbers, oxidation inhibitors, lubricants, colorants, antistatic agents, flame retardants, water repellents, waterproofing agents, hydrophilicity-imparting agents, conductivity-imparting agents, thermal conductivity-imparting agents, electromagnetic wave shielding agents, translucency-adjusting agents, fluorescent agents, slidability-imparting agents, transparency-imparting agents, antiblocking agents, metal inactivating agents, and antibacterial agents.

The laminate of the present invention may be produced by any method without limitation. Preferably, the laminate is produced by thermally laminating an adhesive layer including the acrylic adhesive composition (Z) onto a substrate layer including the polyolefin resin (a) described hereinabove. Examples of the lamination methods include injection insert molding methods, extrusion lamination methods, coextrusion methods, calendering methods, slush molding methods, pressing methods, and melt-casting methods.

When, for example, the laminate is produced by an injection insert molding method, a substrate layer formed of the polyolefin resin (a) with a desired shape and a desired size beforehand is placed into a mold, and the adhesive composition of the present invention is injected into the mold to form a laminate. When the laminate is produced by an extrusion lamination method, the acrylic adhesive composition (Z) may be extruded in a molten state from a die that is attached to the extruder and has a predetermined shape, directly onto the surface or the edge of a substrate layer formed of the polyolefin resin (a) with a desired shape and a desired size beforehand, thereby producing a laminate. When the laminate is produced by a coextrusion method, the acrylic adhesive composition (Z) and the polyolefin resin (a) as a substrate layer may be melted concurrently in two extruders and may be extruded to form a laminate. The laminate may be produced by a calendering method in such a manner that the acrylic adhesive composition (Z) is melted and rolled with a heating roll, is held in a molten state through a plurality of rolls, and is thermally bonded to the surface of a substrate layer formed of the polyolefin resin (a) with a desired shape and a desired size beforehand, thereby producing a laminate. When the laminate is produced by a pressing method, the acrylic adhesive composition (Z) is shaped beforehand by an injection molding method or an extrusion method to form a shaped article, and the shaped article is pressed under heating conditions with a device, such as a press machine, against a substrate layer formed of the polyolefin resin (a) with a desired shape and a desired size beforehand, thereby producing a laminate.

Preferred thermal lamination methods are an extrusion lamination method, a coextrusion method, and a calendering method.

The adhesive layer of the laminate of the present invention is brought into intimate contact with the surface of articles formed of various materials. In this manner, for example, the laminate is suitably used as a surface protective film that protects the surface of the articles, or is suitably used as a resealable packaging laminate film.

When the laminate of the present invention is used as a surface protective film, the thickness of the adhesive layer is preferably 20 um or less, and more preferably 15 um or less, and is preferably 1 um or more. If the thickness of the adhesive layer exceeds the upper limit, the adhesive layer adheres to the surface-protected article so strongly that peeling of the surface protective film from the article may leave adhesive residue; furthermore, the adhesive layer adheres to the substrate layer so strongly that the surface protective film may be difficult to feed from the roll product. If the thickness of the adhesive layer is below the lower limit, the surface protective film may fail to protect a protrudent adherend and the top of the protrusion may be damaged; furthermore, such an adhesive layer has low adhesive strength and may separate from the adherend.

The surface protective film may be produced by the laminate production method described hereinabove. The surface protective film is preferably produced by an extrusion lamination method or a coextrusion method, and more preferably by a coextrusion method. The coextrusion method can laminate the substrate layer and the adhesive layer together at one time without a solvent, and thus can form the surface protective film with a relatively simple production apparatus. Furthermore, simplified production process reduces the cost for the production of the surface protective film. Furthermore, the surface protective film formed by the coextrusion method has a high interlayer strength between the substrate layer and the adhesive layer and is unlikely to leave adhesive residue when the surface protective film is peeled from an article. The coextrusion method may be a feed block method or a multi-manifold method.

The surface protective film is used to protect the surface of an article by intimately adhering to the surface of the article. Preferably, the surface protective film may be used for the purpose of protecting the surface of articles including metal plates, glass plates, and synthetic resin plates, such as PMMA plates. In particular, the surface protective film may be suitably used for these articles in the form of prism sheets that have protrusions on the surface which are substantially triangle in cross section and have an apex angle of 80° to 100° and a height of 20 um to 80 um.

As long as the substrate layer and the adhesive layer are present, the surface protective film may have an additional functional layer, such as, for example, a UV absorbing layer. When, for example, the surface protective film has a UV absorbing layer, an article covered with the surface protective film can be protected not only from physical contacts but also from UV rays.

Furthermore, a releasing agent may be added in the substrate layer. In this case, the surface protective film may be coiled and fed smoothly without contamination of the adhesive layer. Examples of the releasing agents include siloxane-grafted olefin polymer resins.

As compared with the conventionally known acrylic adhesive compositions, the adhesive layer including the acrylic adhesive composition (Z) has a high bond strength with respect to the substrate layer including the polyolefin resin (a). For example, this eliminates the need of subjecting the substrate layer including the polyolefin resin (a) to treatment that increases the bond strength with respect to the adhesive layer including the acrylic adhesive composition, for example, primer layer formation or surface treatment. Thus, the laminate of the present invention is preferably such that the adhesive layer (B) including the acrylic adhesive composition (Z) is directly laminated on the substrate layer (A) including the polyolefin resin (a). In a preferred embodiment of the laminate of the present invention, the adhesive layer (B) is provided in contact on the substrate layer (A).

Furthermore, the above laminate may be overlaid on an adherend including a polar material and, after an amount of time, the adherend and the laminate may be separated from each other with reduced probability of problems, such as separation occurring between the substrate layer and the adhesive layer, or the adhesive layer remaining on the adherend.

Furthermore, the adhesive layer including the acrylic adhesive composition (Z) has a small change in adhesive force over time. Thus, the laminate of the present invention may be overlaid on an adherend, left as such for a certain amount of time, and peeled from the adherend with reduced occurrence of adhesive residue problems.

These advantages offer a wide and varied range of applications of the adhesive composition of the present invention and the laminate of the present invention, for example, suitable use as surface protective films for optical substrates.

The laminate of the present invention may be used as a resealable packaging laminate film. This resealable packaging laminate film is typically used for an article having an opening (typically a container or a bag (for example, a food container or a food bag)).

For example, the resealable packaging laminate film is used in such a manner that the laminate of the present invention is provided on at least part of the outer periphery of the opening of the article along the outer periphery. In consideration of sealability, it is typically desirable that when the article is used as a resealable packaging material, the laminate of the present invention as the resealable packaging laminate film be provided along a region continuous on the outer periphery of the article.

The laminate of the present invention provided along the outer periphery of the opening of the article as described above is used as a member that allows the packaging material to be sealed, opened, and resealed freely. When the laminate of the present invention is used as a resealable packaging laminate film, importance lies in easy openability and resealability, namely, that the film can be easily peeled and attached by hand.

When the laminate of the present invention is used as a resealable packaging laminate film, the thickness of the adhesive layer is preferably 100 um or less, more preferably 50 um or less, and still more preferably 30 um or less, and is preferably 1 um or more. If the thickness of the adhesive layer exceeds the upper limit, the adhesive layer exhibits an excessively high adhesive strength at the time of resealing and is sometimes difficult to peel. If the thickness of the adhesive layer is below the lower limit, the adhesive strength of the adhesive layer at the time of resealing is so low that resealing is sometimes difficult.

Similarly to the surface protective film described hereinabove, the resealable packaging laminate film is preferably produced by an extrusion lamination method or a coextrusion method, and is more preferably produced by a coextrusion method. The coextrusion method can laminate the substrate layer and the adhesive layer together at one time without a solvent, and thus can form the resealable packaging laminate film with a relatively simple production apparatus. Furthermore, simplified production process reduces the cost for the production of the resealable packaging laminate film. Furthermore, the resealable packaging laminate film formed by the coextrusion method has a high interlayer strength between the substrate layer and the adhesive layer, and an article can be opened by peeling of the resealable packaging laminate film from the article without separation between the substrate layer and the adhesive layer, and further can be resealed. The coextrusion method may be a feed block method or a multi-manifold method. As long as the substrate layer and the adhesive layer are present, the resealable packaging laminate film may have an additional functional layer, such as, for example, a UV absorbing layer. When, for example, the resealable packaging laminate film has a UV absorbing layer, an article covered with the resealable packaging laminate film can be protected not only from physical contacts but also from UV rays.

Furthermore, a non-sealable film may be applied to the side of the substrate layer opposite from the adhesive layer to impart properties, such as mechanical characteristics, shielding properties, and printability, to the resealable packaging laminate film. Examples of the films that are applied include, but are not limited to, biaxially stretched polyethylene terephthalate (PET) films, metal-deposited PET films, biaxially stretched polypropylene films, biaxially stretched polyamide (nylon) films, non-stretched polyamide films, polyvinyl chloride (PVC) films, amorphous PET films, and polyacrylonitrile (PAN) films.

As already described, the resealable packaging laminate film is used as a package member that is provided along the outer periphery of an opening of an open article (for example, a container or a bag that contains food placed from the opening) and that allows the packaging material to be sealed, opened, and resealed freely. Examples of the materials of the articles (containers, bags) used together with the resealable packaging laminate films include polystyrene, rigid PVC, amorphous PET, PET, metal-deposited PET, polypropylene, and high-density polyethylene.

In the laminate of the present invention, the adhesive layer including the acrylic adhesive composition (Z) has a small change in adhesive force over time. Thus, the laminate of the present invention may be overlaid on an adherend, left as such for a certain amount of time, and peeled from the adherend with ease.

The above and other advantages offer a wide and varied range of applications of the adhesive composition of the present invention and the laminate of the present invention, for example, suitable use as surface protective films for optical substrates, and as resealable packaging laminate films for food packages.

Examples

Hereinbelow, the present invention will be described based on Examples without limiting the scope of the present invention to such Examples. In Examples and Comparative Examples, properties were measured or evaluated by the following methods.

[Measurement or evaluation methods]

<Melt mass flow rate (MFR)>

The melt mass flow rate (MFR) was measured using a melt indexer in accordance with ISO 1133-1: 2011.

• Apparatus: Melt indexer "L220" (TATEYAMA KAGAKU INDUSTRY CO., LTD.)

<Weight average molecular weight (Mw), number average molecular weight (Mn), and molecular weight distribution (Mw/Mn) >

The polystyrene-equivalent molecular weights were determined by gel permeation chromatography (hereinafter, abbreviated as GPC). Details are as follows.

• Apparatus: GPC apparatus "HLC-8020" manufactured by TOSOH CORPORATION
• Separation columns: "TSKgel GMHXL", "G4000HXL" and "G5000HXL" manufactured by TOSOH CORPORATION were connected in series.
• Eluent: Tetrahydrofuran
• Eluent flow rate: 1.0 ml/min
• Column temperature: 40°C
• Detection method: Differential refractive index (RI)

<Mass ratio of polymer blocks in acrylic block copolymers (I) >

The proportions of constituents in polymer blocks in an acrylic block copolymer (I), and the compositional ratio of the polymer blocks were determined by $^1$H-NMR ($^1$H-nuclear magnetic resonance) measurement. Details are as follows.

• Apparatus: Nuclear magnetic resonance apparatus "JNM-LA400" manufactured by JEOL Ltd.
• Deuterated solvent: Deuterated chloroform

[Raw materials used in Examples and Comparative Examples]

Details of the raw materials used in Examples and Comparative Examples are described below. Tables 1 and 2 describe their properties.

[Acrylic block copolymers used in Examples and Comparative Examples]

Acrylic block copolymers (1-1), (1-2), and (1-5) corresponding to the acrylic block copolymers (I), and other acrylic block copolymers (I'-3) and (I'-4) were produced as follows.

[Production Example 1] <Acrylic block copolymer (I-1)>

(1) A 100 L polymerization tank was purged with nitrogen. While performing stirring at room temperature, there were added 49.5 kg of toluene and 0.56 kg of 1,2-dimethoxyethane. Subsequently, 1.56 kg of a toluene solution containing 780.0 mmol of isobutylbis(2,6-di-t-butyl-4-methylphenoxy)aluminum was added. Furthermore, 0.04 kg of a sec-butyllithium in cyclohexane solution containing 69.5 mmol of sec-butyllithium was added.

(2) Subsequently, 0.55 kg of methyl methacrylate was added to the mixture. The reaction solution was yellow at first and became colorless after 60 minutes of stirring at room temperature.

(3) Subsequently, the internal temperature of the polymerization solution was lowered to -30°C, and 7.85 kg of 2-ethylhexyl acrylate was added dropwise over 2 hours. After the completion of the dropwise addition, the mixture was stirred at -30°C for 5 minutes.

(4) Furthermore, 0.62 kg of methyl methacrylate was added, and the mixture was stirred at room temperature overnight.

(5) The polymerization reaction was terminated by the addition of 0.87 kg of methanol. The reaction solution obtained was poured into 250 kg of methanol to precipitate a deposit. The deposit was then recovered and was dried to give 6.5 kg of an acrylic block copolymer (I-1).

(6) The above procedure of Production Example 1 was repeated 10 times. Approximately 65 kg of the acrylic block copolymer (I-1) was thus obtained.

(7) The acrylic block copolymer (I-1) obtained was pelletized by a strand cut method using a twin-screw extruder ("ZSK-25" manufactured by Werner & Pfleiderer).

The properties measured of the acrylic block copolymer (I-1) are described in Table 1.

[Production Example 2] <Acrylic block copolymer (I-2)>

(1) A 100 L polymerization tank was purged with nitrogen. While performing stirring at room temperature, there were added 48.5 kg of toluene and 0.04 kg of 1,2-dimethoxyethane. Subsequently, 0.82 kg of a toluene solution containing 409.5 mmol of isobutylbis(2,6-di-t-butyl-4-methylphenoxy)aluminum was added. Furthermore, 0.06 kg of a sec-butyllithium in cyclohexane solution containing 102.5 mmol of sec-butyllithium was added.

(2) Subsequently, 0.49 kg of methyl methacrylate was added. The reaction solution was yellow at first and became colorless after 60 minutes of stirring at room temperature.

(3) Subsequently, the internal temperature of the polymerization solution was lowered to -30°C, and 14.5 kg of 2-ethylhexyl acrylate was added dropwise over 2 hours. After the completion of the dropwise addition, the mixture was stirred at -30°C for 5 minutes.

(4) Furthermore, 0.54 kg of methyl methacrylate was added, and the mixture was stirred at room temperature overnight.

(5) The polymerization reaction was terminated by the addition of 0.8 kg of methanol. The reaction solution obtained was poured into 350 kg of methanol to precipitate a deposit. The deposit was then recovered and was dried to give 13.8 kg of an acrylic block copolymer (1-2).

(6) The above procedure of Production Example 2 was repeated 10 times. Approximately 138 kg of the acrylic block copolymer (1-2) was thus obtained.

(7) The acrylic block copolymer (1-2) obtained was pelletized by a strand cut method using a twin-screw extruder ("ZSK-25" manufactured by Werner & Pfleiderer).

The acrylic block copolymer (1-2) is described in Table 1.

[Production Example 3] <Acrylic block copolymer (I'-3)>

(1) A 100 L polymerization tank was purged with nitrogen. While performing stirring at room temperature, there were added 47.0 kg of toluene and 1.09 kg of 1,2-dimethoxyethane. Subsequently, 1.62 kg of a toluene solution containing 815.0 mmol of isobutylbis(2,6-di-t-butyl-4-methylphenoxy)aluminum was added. Furthermore, 0.08 kg of a sec-butyllithium in cyclohexane solution containing 136.0 mmol of sec-butyllithium was added.

(2) Subsequently, 1.09 kg of methyl methacrylate was added. The reaction solution was yellow at first and became colorless after 60 minutes of stirring at room temperature.

(3) Subsequently, the internal temperature of the polymerization solution was lowered to -30°C, and 13.7 kg of n-butyl acrylate was added dropwise over 2 hours. After the completion of the dropwise addition, the mixture was stirred at -30°C for 5 minutes.

(4) Furthermore, 1.51 kg of methyl methacrylate was added, and the mixture was stirred at room temperature overnight.

(5) The polymerization reaction was terminated by the addition of 0.51 kg of methanol. The reaction solution obtained was poured into 750 kg of methanol to precipitate a white deposit. The liquid deposit was recovered and was dried to give 15.5 kg of an acrylic block copolymer (I'-3).

(6) The above procedure of Production Example 3 was repeated 10 times. Approximately 155 kg of the acrylic block copolymer (I'-3) was thus obtained.

(7) The acrylic block copolymer (I'-3) obtained was pelletized by a strand cut method using a twin-screw extruder ("ZSK-25" manufactured by Werner & Pfleiderer).

The properties measured of the acrylic block copolymer (I'-3) are described in Table 1.

[Production Example 4] <Acrylic block copolymer (I'-4) >

(1) A 100 L polymerization tank was purged with nitrogen. While performing stirring at room temperature, there were added 47.0 kg of toluene and 1.09 kg of 1,2-dimethoxyethane. Subsequently, 1.62 kg of a toluene solution containing 815.0 mmol of isobutylbis(2,6-di-t-butyl-4-methylphenoxy)aluminum was added. Furthermore, 0.85 kg of a sec-butyllithium in cyclohexane solution containing 145.0 mmol of sec-butyllithium was added.

(2) Subsequently, 1.45 kg of methyl methacrylate was added. The reaction solution was yellow at first and became colorless after 60 minutes of stirring at room temperature.

(3) Subsequently, the internal temperature of the polymerization solution was lowered to -30°C, and 12.0 kg of n-butyl acrylate was added dropwise over 2 hours. After the completion of the dropwise addition, the mixture was stirred at -30°C for 5 minutes.

(4) Furthermore, 2.05 kg of methyl methacrylate was added, and the mixture was stirred at room temperature overnight.

(5) The polymerization reaction was terminated by the addition of 0.5 kg of methanol. The reaction solution obtained was poured into 750 kg of methanol to precipitate a white deposit. The liquid deposit was recovered and was dried to give 14.0 kg of an acrylic block copolymer (I'-4).

(6) The above procedure of Production Example 4 was repeated 10 times. Approximately 140 kg of the acrylic block copolymer (I'-4) was thus obtained.

(7) The acrylic block copolymer (I'-4) obtained was pelletized by a strand cut method using a twin-screw extruder ("ZSK-25" manufactured by Werner & Pfleiderer).

The properties measured of the acrylic block copolymer (I'-4) are described in Table 1.

[Production Example 5] <Acrylic block copolymer (1-5)>

(1) A 100 L polymerization tank was purged with nitrogen. While performing stirring at room temperature, there were added 51.9 kg of toluene and 2.18 kg of 1,2-dimethoxyethane. Subsequently, 1.87 kg of a toluene solution containing 940.0 mmol of isobutylbis(2,6-di-t-butyl-4-methylphenoxy)aluminum was added. Furthermore, 0.15 kg of a sec-butyllithium in cyclohexane solution containing 247.5 mmol of sec-butyllithium was added.

(2) Subsequently, 1.27 kg of methyl methacrylate was added. The reaction solution was yellow at first and became colorless after 60 minutes of stirring at room temperature.

(3) Subsequently, the internal temperature of the polymerization solution was lowered to -30°C, and 10.75 kg of a mixture of n-butyl acrylate/2-ethylhexyl acrylate (mass ratio 50/50) was added dropwise over 2 hours. After the completion of the dropwise addition, the mixture was stirred at -30°C for 5 minutes.

(4) Furthermore, 1.47 kg of methyl methacrylate was added, and the mixture was stirred at room temperature overnight.

(5) The polymerization reaction was terminated by the addition of 0.67 kg of methanol. The reaction solution obtained was poured into 750 kg of methanol to precipitate a white deposit. The white deposit was recovered and was dried to give 12.5 kg of an acrylic block copolymer (1-5).
(6) The above procedure of Production Example 5 was repeated 10 times. Approximately 125 kg of the acrylic block copolymer (1-5) was thus obtained.
(7) The acrylic block copolymer (1-5) obtained was pelletized by a strand cut method using a twin-screw extruder ("ZSK-25" manufactured by Werner & Pfleiderer).

The properties measured of the acrylic block copolymer (1-5) are described in Table 1.

[Production Example 6] <Acrylic block copolymer (I-6)>

(1) A 100 L polymerization tank was purged with nitrogen. While performing stirring at room temperature, there were added 63.2 kg of toluene and 0.032 kg of 1,2-dimethoxyethane. Subsequently, 1.24 kg of a toluene solution containing 623.1 mmol of isobutylbis(2,6-di-t-butyl-4-methylphenoxy)aluminum was added. Furthermore, 0.20 kg of a sec-butyllithium in cyclohexane solution containing 338.7 mmol of sec-butyllithium was added.
(2) Subsequently, 1.18 kg of methyl methacrylate was added. The reaction solution was yellow at first and became colorless after 60 minutes of stirring at room temperature.
(3) Subsequently, the internal temperature of the polymerization solution was lowered to -30°C, and 19.5 kg of 2-ethylhexyl acrylate was added dropwise over 2 hours. After the completion of the dropwise addition, the mixture was stirred at -30°C for 5 minutes.
(4) Furthermore, 1.01 kg of methyl methacrylate was added, and the mixture was stirred at room temperature overnight.
(5) The polymerization reaction was terminated by the addition of 0.6 kg of methanol. The reaction solution obtained was poured into 750 kg of methanol to precipitate a white deposit. The liquid deposit was recovered and was dried to give 19.7 kg of an acrylic block copolymer (1-6).
(6) The above procedure of Production Example 4 was repeated 10 times. Approximately 140 kg of the acrylic block copolymer (1-6) was thus obtained.
(7) The acrylic block copolymer (1-6) obtained was pelletized by a strand cut method using a twin-screw extruder ("ZSK-25" manufactured by Werner & Pfleiderer).

The properties measured of the acrylic block copolymer (1-6) are described in Table 1.

[Table 1]

| | | Mw | Mw/Mn | Content (mass%) of polymer blocks (b2) | Type and mass ratio of acrylic acid ester(s) in polymer block (b1) |
|---|---|---|---|---|---|
| Acrylic block copolymers | 1-1 | 200,000 | 1.30 | 13.0 | 2EHA |
| | 1-2 | 250,000 | 1.30 | 6.8 | 2EHA |
| | I'-3 | 159,000 | 110 | 16.3 | nBA |
| | I'-4 | 111,000 | 1.09 | 22.5 | nBA |
| | I-5 | 63,500 | 110 | 20.0 | nBA/2EHA=50/50 |
| | I-6 | 48,000 | 1.10 | 23.5 | 2EHA |

[Tackifier resins (P) used in Examples and Comparative Examples]

• P-1: Product name "Foral 85E" manufactured by Eastman Chemical Company, hydrogenated rosin ester
• P-2: Product name "Arkon M90" manufactured by Arakawa Chemical Industries, Ltd., hydrogenated petroleum resin
• P-3: Product name "Arkon P90" manufactured by Arakawa Chemical Industries, Ltd., hydrogenated petroleum resin
• P-4: Product name "SUKOREZ-640" manufactured by Kolon Industries, Inc., hydrocarbon resin
• P-5: Product name "Kristalex F85" manufactured by Eastman Chemical Company, aromatic hydrocarbon resin

• P-6: Product name "YS resin SX100" manufactured by YASUHARA CHEMICAL CO., LTD., aromatic hydrocarbon resin
• P-7: Product name "Quintone R100" manufactured by ZEON CORPORATION, hydrocarbon resin
• P-8: Product name "Novares TM 85 AS", manufactured by RAIN CARBON INC., aromatic hydrocarbon resin

[Styrenic thermoplastic elastomer (Q) used in Examples and Comparative Examples]

A styrenic thermoplastic elastomer (Q) was produced as follows.

Monomers (styrene, isoprene) corresponding to respective blocks were sequentially added to cyclohexane solvent and anionically polymerized using sec-butyllithium (a cyclohexane solution) as a polymerization initiator in the presence of a vinylating agent, such as THF, as required. Thus, a polymerization reaction solution was obtained that contained an unhydrogenated block copolymer including a plurality of polymer blocks. After the polymerization reaction was terminated, palladium carbon as a hydrogenation catalyst was added to the reaction solution containing the unhydrogenated block copolymer, and hydrogenation reaction was carried out. The hydrogenation reaction was terminated, and the solution was allowed to cool and the pressure was released. Palladium carbon was removed by filtration. The filtrate was concentrated and was vacuum dried to give a styrenic thermoplastic elastomer (Q). The detailed production conditions may be determined with reference to literature, such as, for example, Synthetic Examples described in Japanese Patent No. 5936791.

The styrenic thermoplastic elastomer (Q) contained 13 mass% of polymer blocks (styrene polymer blocks) containing styrene-derived structural units, and the value of MFR thereof at 230°C × 2.16 kg was 7 g/10 min. The styrenic thermoplastic elastomer (Q) is a mixture of a hydrogenated product of a triblock copolymer composed of styrene polymer block/isoprene polymer block/styrene polymer block, and a hydrogenated product of a diblock copolymer composed of styrene polymer block/isoprene polymer block.

[Examples 1 to 14, Comparative Examples 1 to 6, and Reference Examples 1 and 2]

(Production of pellets of acrylic adhesive compositions)

In Examples 1 and 2, Comparative Example 1, and Reference Examples 1 and 2, the pellets of the acrylic block copolymer obtained as described above were used as adhesive composition pellets. In Examples 3 to 13 and Comparative Examples 2 to 5, the acrylic block copolymer and the tackifier resin (P) were mixed together in proportions described in Table 2. In Examples 14 and Comparative Example 6, the acrylic block copolymer, the tackifier resin (P), and the styrenic thermoplastic elastomer (Q) were mixed together in proportions described in Table 2. The mixtures were each melt-kneaded with a twin-screw extruder described below at a melting temperature and under kneading conditions described below, and the kneaded product was extruded into a strand, which was then cut. Adhesive composition pellets were thus produced.

Twin-screw extruder: ZSK25 (Werner & Pfleiderer)
Melting temperature: 230°C
Kneading conditions: Screw rotational speed 250 rpm, throughput 12 kg/h

(Production of laminates)

A two-component two-layer T-die coextrusion equipment described below was used. The adhesive composition pellets obtained as described above and pellets of a homopolypropylene resin (NOBLEN: FLX80E4 (manufactured by SUMITOMO CHEMICAL Co., Ltd.) MFR (230°C, 2.16 kgf) = 7.5 g/10 min) were each fed to the T-die coextrusion equipment and melt-coextruded under conditions described below so that an adhesive layer composed of the adhesive composition and a substrate layer composed of the homopolypropylene resin were in contact with each other. The laminate film including these two layers was wound around a paper tube (φ76.4 (inner diameter) × 12 t × 330 L). A roll of the laminate film (layer configuration: substrate 48 um; adhesive layer 12 um) was thus obtained.

T-die co-extrusion equipment: Manufactured by GM ENGINEERING Co., Ltd.
Processing temperature: 230°C for the homopolypropylene resin (PP resin); 230°C for the adhesive compositions described in Examples and Comparative Examples
Feed block temperature: 230°C
T-die temperature; 230°C
Winding speed: 6 m/min

[Examples 15 to 23 and Comparative Example 9]

(Production of pellets of acrylic adhesive compositions)

In Examples 15 to 23 and Comparative Example 9, the pellets of the acrylic block copolymer obtained as described hereinabove, and the tackifier resin (P) were melt-kneaded in proportions described in Table 3 or 4 with use of Labo Plastomill described below, at a melting temperature and under kneading conditions described below. Adhesive compositions were thus produced.

      Labo Plastomill: 4M150 manufactured by Toyo Seiki Seisaku-sho, Ltd.
      Melting temperature: 230°C
      Kneading conditions: Rotational speed 100 rpm, time 5 minutes

(Production of laminates)

Pellets of a maleic anhydride-modified polypropylene resin (ADMER QF551 (manufactured by Mitsui Chemicals, Inc.), MFR (230°C, 2.16 kgf) = 4.4 g/10 min) were pressed with a press machine described below under conditions described below to form a 50 um pressed sheet.
Separately, the adhesive composition obtained as described above was sandwiched between polytetrafluoroethylene sheets, and the unit was hot pressed under the same conditions so that the thickness of the adhesive composition would be 25 um.

      Press machine: AYS-10 manufactured by Shinto Metal Industries, Ltd.
      Pressing conditions: Temperature 230°C, press pressure 9 MPa, preheating time 3 minutes, pressing time 1 minute

Subsequently, the polytetrafluoroethylene sheet on one side was peeled off, and the adhesive composition was bonded to the maleic anhydride-modified polypropylene resin. The unit was treated under the same conditions to form a laminate. Press machine: AYS-10 manufactured by Shinto Metal Industries, Ltd.
Pressing conditions: Temperature 230°C, press pressure 9 MPa, preheating time 3 minutes, pressing time 1 minute
The MFR (230°C, 2.16 kgf) of the acrylic adhesive compositions used in Examples and Comparative Examples was measured, and properties of the laminate films obtained in Examples and Comparative Examples were evaluated in accordance with methods described below. The results are described in Table 2.

<Adhesive force with respect to PMMA plates and PET plates>

The roll of the laminate film was cut to give a strip 100 mm in length × 25 mm in width which extended in the flow direction and included a pile of several pieces of the laminate film. The pieces of the laminate film were peeled one by one from the outermost side. The peeled pieces of the laminate film were pressure-bonded, through their adhesive layer, to polymethyl methacrylate resin (PMMA) plates (SUMIPEX E (manufactured by Sumitomo Chemical Co., Ltd.)) with a laminating machine (manufactured by CHEMINSTRUMENTS; 2 kg rubber roller, 10 mm/min), and were allowed to stand at 23°C × 50% RH for 24 hours or at 60°C for 168 hours. Subsequently, the films that had been attached were peeled while measuring the force in accordance with JIS Z0237: 2009 in a measurement environment and under tensile conditions (stress rate, peeling angle) described below with use of a tensile tester described below. The average of five pieces was determined.
Separately, the laminate produced by pressing was cut to give strips 100 mm in length × 25 mm in width. The strips of the laminate film were pressure-bonded, through their adhesive layer, to polymethyl methacrylate resin (PMMA) plates (SUMIPEX E (manufactured by Sumitomo Chemical Co., Ltd.)) or polyethylene terephthalate resin (PET) plates (PET-0610 (manufactured by C.I. TAKIRON Corporation)), and were allowed to stand at 23°C × 50% RH for 24 hours or at 60°C for 168 hours. Subsequently, the films that had been attached were peeled while measuring the force in accordance with JIS Z0237: 2009 in a measurement environment and under tensile conditions (stress rate, peeling angle) described below with use of a tensile tester described below. The average of five pieces was determined.

      Tensile tester: Desktop tensile tester (AGS-X; manufactured by Shimadzu Corporation)
      Stress rate: 300 mm/min
      Peeling angle: 180°
      Measurement environment: 23°C × 50% RH

<Change ratio of adhesive force with respect to PMMA plates and PET plates>

As an index for the over-time change (over-time increase) in adhesive force, the value of ("adhesive force after 168 hours at 60°C" a "adhesive force after 24 hours at 23°C and 50% RH") was calculated.

<Mode of peeling from PMMA plates and PET plates>

After the film was peeled from the PMMA plate or the PET plate under the conditions described above, the PMMA plate or the PET plate was visually inspected for a residue of the adhesive composition.

-Interfacial peeling: The peeling mode was judged to be interfacial peeling when the adhesion between the polyolefin (PP resin) substrate layer and the adhesive layer was good, and the adhesive layer was peeled along the interface with the PMMA plate or the PET plate without any acrylic adhesive composition remaining on the PMMA plate or the PET plate.
• Transfer: The peeling mode was judged to be transfer when the adhesion between the polyolefin (PP resin) substrate layer and the adhesive layer was low, and the acrylic adhesive composition separated from the polyolefin substrate layer and remained on the PMMA plate or the PET plate.

<Evaluation of resealability/repeelability (openability) to/from PET plates and PP plates>
Pieces of the laminate were pressure-bonded, through their adhesive layer, to polyethylene terephthalate resin (PET) plates (PET-0610 (manufactured by C.I. TAKIRON Corporation)) or polypropylene resin (PP) plates (manufactured by AS ONE) with a laminating machine (manufactured by CHEMINSTRUMENTS; 2 kg rubber roller, 10 mm/min), and were allowed to stand at 23°C × 50% RH for 24 hours. Subsequently, the films that had been attached were peeled while measuring the force (the opening force required for the first opening) in accordance with JIS Z0237: 2009 in a measurement environment and under tensile conditions (stress rate, peeling angle) described below with use of a tensile tester described below. The average of five pieces was determined. The peeling mode was also determined. Tensile tester: Desktop tensile tester (AGS-X; manufactured by Shimadzu Corporation)

Stress rate: 300 mm/min
Peeling angle: 180°
Measurement environment: 23°C × 50% RH

Subsequently, the pieces of the laminate that had been peeled were attached, through their adhesive layer, to the same adherends again with the laminating machine (manufactured by CHEMINSTRUMENTS; 2 kg rubber roller, 10 mm/min). Similarly to the measurement of peel strength, the films were peeled after 24 hours to determine the force (the opening force required for the second opening). The peeling mode was also determined. The opening force and the peeling mode were measured and determined until the fourth opening for the last time.

[Table 2]

| | | Ex. 1 | Ex. 2 | Ex. 3 | Ex. 4 | Ex. 5 | Ex. 6 |
|---|---|---|---|---|---|---|---|
| Acrylic block copolymers (I) | I-1 | 100 | | 90 | 83 | | 90 |
| | I-2 | | 100 | | | 90 | |
| | I'-3 | | | | | | |
| | I'-4 | | | | | | |
| | I-5 | | | | | | |
| | I-6 | | | | | | |
| Tackifier resins (P) | P-1 | | | 10 | 17 | 10 | |
| | P-2 | | | | | | 10 |
| | P-3 | | | | | | |
| | P-4 | | | | | | |
| | P-5 | | | | | | |
| | P-6 | | | | | | |
| | | | | | | | |

(continued)

|  |  | Ex. 1 | Ex. 2 | Ex. 3 | Ex. 4 | Ex. 5 | Ex. 6 |
|---|---|---|---|---|---|---|---|
| Styrenic thermoplastic elastomer (Q) |  |  |  |  |  |  |  |
| Adhesive force with respect to PMMA plates (Test pieces after 24 hours at 23°C and 50% RH) Measurement environment:23°C, 50%RH | N/25 mm (average) | 7.6 | 7.6 | 8.6 | 8.3 | 9.3 | 8.9 |
| Adhesive force with respect to PMMA plates (Test pieces after 168 hours at 60°C) Measurement environment:23°C, 50%RH | | 8.1 | 8.0 | 8.6 | 8.4 | 9.5 | 9.0 |
| Change ratio of adhesive force with respect to PMMA plates (Adhesive force after 168 hours at 60°C/ Adhesive force after 24 hours at 23°C and 50% RH) | | 1.07 | 1.05 | 1.00 | 1.01 | 1.02 | 1.01 |
| Mode of peeling from PMMA plates | | Interfacial peeling | Interfacial peeling | Interfacial peeling | Interfacial peeling | Interfacial peeling | Interfacial peeling |
| MFR of acrylic adhesive composition (Z) (230°C, 2.16 kgf) (g/10 min) | | 0.5 | 8.7 | 2.0 | 4.2 | 12.0 | 1.5 |
|  |  | Ex. 7 | Ex. 8 | Ex. 9 | Ex. 10 | Ex. 11 | Ex. 12 |
| Acrylic block copolymers (I) | I-1 | 83 |  | 90 | 83 | 90 | 83 |
| | I-2 |  | 90 |  |  |  |  |
| | I'-3 |  |  |  |  |  |  |
| | I'-4 |  |  |  |  |  |  |
| | I-5 |  |  |  |  |  |  |
| | I-6 |  |  |  |  |  |  |
| Tackifier resins (P) | P-1 |  |  |  |  |  |  |
| | P-2 | 17 | 10 |  |  |  |  |
| | P-3 |  |  | 10 | 17 |  |  |
| | P-4 |  |  |  |  | 10 | 17 |
| | P-5 |  |  |  |  |  |  |
| | P-6 |  |  |  |  |  |  |

**EP 4 269 522 A1**

(continued)

| | | Ex. 7 | Ex. 8 | Ex. 9 | Ex. 10 | Ex. 11 | Ex. 12 |
|---|---|---|---|---|---|---|---|
| | | | | | | | |
| | | | | | | | |
| | | | | | | | |
| | | | | | | | |
| Styrenic thermoplastic elastomer (Q) | | | | | | | |
| Adhesive force with respect to PMMA plates (Test pieces after 24 hours at 23°C and 50% RH) Measurement environment:23°C, 50%RH | N/25 mm (average) | 9.9 | 9.4 | 8.6 | 7.7 | 7.4 | 7.0 |
| Adhesive force with respect to PMMA plates (Test pieces after 168 hours at 60°C) Measurement environment:23°C, 50%RH | | 9.9 | 9.5 | 8.7 | 7.9 | 7.5 | 7.2 |
| Change ratio of adhesive force with respect to PMMA plates (Adhesive force after 168 hours at 60°C/ Adhesive force after 24 hours at 23°C and 50% RH) | | 100 | 101 | 1.01 | 103 | 1.01 | 103 |
| Mode of peeling from PMMA plates | | Interfacial peeling | Interfacial peeling | Interfacial peeling | Interfacial peeling | Interfacial peeling | Interfacial peeling |
| MFR of acrylic adhesive composition (Z) (230°C, 2.16 kgf) (g/10 min) | | 3.6 | 11.5 | 1.4 | 3.5 | 1.3 | 3.4 |

| | | Ex. 13 | Ex. 14 | | | | |
|---|---|---|---|---|---|---|---|
| Acrylic block copolymers (I) | I-1 | 90 | 30 | | | | |
| | I-2 | | | | | | |
| | I'-3 | | | | | | |
| | I'-4 | | | | | | |
| | I-5 | | | | | | |
| | I-6 | | | | | | |

(continued)

| | | Ex. 13 | Ex. 14 | | | | |
|---|---|---|---|---|---|---|---|
| Tackifier resins (P) | P-1 | | | | | | |
| | P-2 | | | | | | |
| | P-3 | | | | | | |
| | P-4 | | 19 | | | | |
| | P-5 | 10 | | | | | |
| | P-6 | | | | | | |
| Styrenic thermoplastic elastomer (Q) | | | 51 | | | | |
| Adhesive force with respect to PMMA plates (Test pieces after 24 hours at 23°C and 50% RH) Measurement environment: 23°C, 50%RH | N/25 mm (average) | 8.5 | 8.0 | | | | |
| Adhesive force with respect to PMMA plates (Test pieces after 168 hours at 60°C) Measurement environment:23°C, 50%RH | | 8.6 | 10.4 | | | | |
| Change ratio of adhesive force with respect to PMMA plates (Adhesive force after 168 hours at 60°C/ Adhesive force after 24 hours at 23°C and 50% RH) | | 1.01 | 1.30 | | | | |
| Mode of peeling from PMMA plates | | Interfacial peeling | Interfacial peeling | | | | |
| MFR of acrylic adhesive composition (Z) (230°C, 2.16 kgf) (g/10 min) | | 2.5 | 20.0 | | | | |
| | | Comp. Ex. 1 | Comp. Ex. 2 | Comp. Ex. 3 | Comp. Ex. 4 | Comp. Ex. 5 | Comp. Ex. 6 |
| Acrylic block copolymers (I) | I-1 | | | | | | |
| | I-2 | | | | | | |
| | I'-3 | 100 | 90 | | 90 | 90 | |
| | I'-4 | | | 90 | | | 30 |
| | I-5 | | | | | | |
| | I-6 | | | | | | |

(continued)

| | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|
| Tackifier resins (P) | P-1 | | | | | | |
| | P-2 | | 10 | 10 | | | |
| | P-3 | | | | | | |
| | P-4 | | | | | | 19 |
| | P-5 | | | | | 10 | |
| | P-6 | | | | 10 | | |
| Styrenic thermoplastic elastomer (Q) | | | | | | | 51 |
| Adhesive force with respect to PMMA plates (Test pieces after 24 hours at 23°C and 50% RH) Measurement environment:23°C, 50%RH | N/25 mm (average) | - | - | - | - | - | 7.5 |
| Adhesive force with respect to PMMA plates (Test pieces after 168 hours at 60°C) Measurement environment:23°C, 50%RH | | - | - | - | - | - | 12.0 |
| Change ratio of adhesive force with respect to PMMA plates (Adhesive force after 168 hours at 60°C/ Adhesive force after 24 hours at 23°C and 50% RH) | | - | - | - | - | - | 160 |
| Mode of peeling from PMMA plates | | Transfer | Transfer | Transfer | Transfer | Transfer | Interfacial peeling |
| MFR of acrylic adhesive composition (Z) (230°C, 2.16 kgf) (g/10 min) | | - | - | - | - | - | 72.0 |
| | | Ref. Ex. 1 | Ref. Ex. 2 | | | | |
| Acrylic block copolymers (I) | I-1 | | | | | | |
| | I-2 | | | | | | |
| | I'-3 | | | | | | |
| | I'-4 | | | | | | |
| | I-5 | 100 | | | | | |
| | I-6 | | 100 | | | | |

(continued)

|  | | Ref. Ex. 1 | Ref. Ex. 2 |
|---|---|---|---|
| Tackifier resins (P) | P-1 | | |
| | P-2 | | |
| | P-3 | | |
| | P-4 | | |
| | P-5 | | |
| | P-6 | | |
| Styrenic thermoplastic elastomer (Q) | | | |
| Adhesive force with respect to PMMA plates (Test pieces after 24 hours at 23°C and 50% RH) Measurement environment: 23°C, 50%RH | N/25 mm (average) | 11.9 | 1.4 |
| Adhesive force with respect to PMMA plates (Test pieces after 168 hours at 60°C) Measurement environment:23°C, 50% RH | | 18.5 | 10.1 |
| Change ratio of adhesive force with respect to PMMA plates (Adhesive force after 168 hours at 60°C/ Adhesive force after 24 hours at 23°C and 50%RH) | | 1.55 | 7.20 |
| Mode of peeling from PMMA plates | | Interfacial peeling | Interfacial peeling |
| MFR of acrylic adhesive composition (Z) (230°C, 2.16 kgf) (g/10 min) | | >100 | >100 |

As demonstrated in Examples 1 and 2, the acrylic adhesive composition including the acrylic block copolymer (I) formed an adhesive layer that exhibited good adhesion properties with respect to the polyolefin (PP resin) substrate layer and also showed high adhesive force with respect to the PMMA plate and the PET plate, and further had a small change in adhesive force with respect to the PMMA plate even after being tested at 60°C for 7 days, that is, had a small increase in adhesive force over time. Furthermore, because the adhesive layer had high adhesion properties with respect to the substrate layer, the laminate film that had been attached to the PMMA plate as an adherend was peeled from the adherend without leaving any adhesive residue.

In Examples 3 to 13, the laminates had an adhesive layer that included a kneaded mixture obtained while changing the type and the amount of the tackifier resin relative to the acrylic block copolymer (I). These adhesive layers tended to have high adhesive force with respect to the PMMA plate, and had a small change in adhesive force even after being tested at 60°C for 7 days, that is, had a small increase in adhesive force over time. Furthermore, because the adhesive layers had high adhesion properties with respect to the substrate layer, the laminate films that had been attached to the PMMA plate as an adherend were peeled from the adherend without leaving any adhesive residue.

The blend in Example 14 contained the styrenic thermoplastic elastomer. As compared to Comparative Example 6, the adhesive layer had a similar level of adhesive force with respect to the PMMA plate, and had a small change in adhesive force after being tested at 60°C for 7 days, that is, had a small increase in adhesive force over time. Furthermore, the adhesive layer had high adhesion properties with respect to the substrate layer, and thus the laminate film that had been attached to the PMMA plate as an adherend was peeled from the adherend without leaving any adhesive residue. From these results, the laminates that have an adhesive layer including the adhesive composition containing the acrylic block copolymer (I) of the present invention have a small change in adhesive force of the adhesive layer over time (can attain a small increase in adhesive force). Furthermore, the adhesive layer leaves no adhesive residue on the adherend.

The acrylic block copolymers used in Comparative Examples 1 to 5 did not satisfy the requirements of the acrylic block copolymer (I). The adhesive layers including the adhesive composition containing such an acrylic block copolymer had low adhesion properties with respect to the polyolefin (PP resin) substrate layer. When the laminate films that had been attached to the PMMA plate as an adherend were peeled from the adherend, the adhesive layer separated from the PP substrate layer and the adhesive composition was transferred to the PMMA plate to leave an adhesive residue.

Furthermore, the comparison between Reference Examples 1 and 2, and Examples 1 to 14 indicates that when the acrylic block copolymer (I) has a relatively high weight average molecular weight (Mw), the adhesive layer including the adhesive composition containing such an acrylic block copolymer attains a smaller change in adhesive force over time.

[Table 3]

| | | Ex. 15 | Ex. 16 | Ex. 17 | Ex. 18 |
|---|---|---|---|---|---|
| Acrylic block copolymers (I) | 1-1 | 100 | 100 | 100 | 100 |
| | I-2 | | | | |
| | I'-3 | | | | |
| | I'-4 | | | | |
| | I-5 | | | | |
| | I-6 | | | | |
| Tackifier resins (P) | P-1 | | | | 50 |
| | P-2 | | | | |
| | P-3 | | | | |
| | P-4 | | | | |
| | P-5 | | | 50 | |
| | P-6 | | | | |
| | P-7 | 25 | 0 | 25 | 25 |
| | P-8 | 50 | 75 | | |
| | | | | | |
| | | | | | |
| Styrenic thermoplastic elastomer (Q) | | | | | |
| Adhesive force with respect to PMMA plates (Test pieces after 24 hours at 23°C and 50% RH) Measurement environment:23°C,50%RH | N/25 mm (average) | 210 | 22.9 | 21.4 | 24.5 |
| Adhesive force with respect to PMMA plates (Test pieces after 168 hours at 60°C) Measurement environment: 23°C,50%RH | | 19.9 | 26.5 | 19.7 | 23.1 |
| Change ratio of adhesive force with respect to PMMA plates (Adhesive force after 168 hours at 60°C/ Adhesive force after 24 hours at 23°C and 50% RH) | | 0.95 | 1.16 | 0.92 | 0.95 |
| Mode of peeling from PMMA plates | | Interfacial peeling | Interfacial peeling | Interfacial peeling | Interfacial peeling |

(continued)

| | | Ex. 15 | Ex. 16 | Ex. 17 | Ex. 18 |
|---|---|---|---|---|---|
| Adhesive force with respect to PET plates (Test pieces after 24 hours at 23°C and 50% RH) Measurement environment: 23°C,50%RH | N/25 mm (average) | 19.9 | 23.5 | 19.3 | 21.7 |
| Adhesive force with respect to PET plates (Test pieces after 168 hours at 60°C) Measurement environment: 23°C,50%RH | | 19.6 | 25.8 | 19.6 | 20.9 |
| Change ratio of adhesive force with respect to PET plates (Adhesive force after 168 hours at 60°C/ Adhesive force after 24 hours at 23°C and 50% RH) | | 0.98 | 1.10 | 1.02 | 0.96 |
| Mode of peeling from PET plates | | Interfacial peeling | Interfacial peeling | Interfacial peeling | Interfacial peeling |
| MFR of acrylic adhesive composition (Z) (230°C, 2.16kgf) (g/10 min) | | 160 | 230 | 170 | 46 |
| | | | Ex. 19 | Ex. 20 | Comp. Ex. 9 |
| Acrylic block copolymers (I) | 1-1 | | 100 | 100 | |
| | 1-2 | | | | |
| | I'-3 | | | | 100 |
| | I'-4 | | | | |
| | I-5 | | | | |
| | I-6 | | | | |
| Tackifier resins (P) | P-1 | | | 25 | 25 |
| | P-2 | | | | |
| | P-3 | | 25 | | |
| | P-4 | | | | |
| | P-5 | | | | |
| | P-6 | | | | |
| | P-7 | | | | |
| | P-8 | | 50 | 50 | 50 |
| | | | | | |
| | | | | | |
| Styrenic thermoplastic elastomer (Q) | | | | | |
| Adhesive force with respect to PMMA plates (Test pieces after 24 hours at 23°C and 50% RH) Measurement environment:23°C,50%RH | N/25 mm (average) | | 21.9 | 21.1 | - |
| Adhesive force with respect to PMMA plates (Test pieces after 168 hours at 60°C) Measurement environment:23°C,50%RH | | | 23.8 | 21.5 | - |
| Change ratio of adhesive force with respect to PMMA plates (Adhesive force after 168 hours at 60°C/ Adhesive force after 24 hours at 23°C and 50% RH) | | | 1.09 | 102 | - |

(continued)

|  |  | Ex. 19 | Ex. 20 | Comp. Ex. 9 |
|---|---|---|---|---|
| Mode of peeling from PMMA plates |  | Interfacial peeling | Interfacial peeling | Transfer |
| Adhesive force with respect to PET plates (Test pieces after 24 hours at 23°C and 50% RH) Measurement environment:23°C,50%RH | N/25 mm (average) | 20.4 | 19.6 | - |
| Adhesive force with respect to PET plates (Test pieces after 168 hours at 60°C) Measurement environment:23°C,50%RH |  | 23.0 | 21.4 | - |
| Change ratio of adhesive force with respect to PET plates (Adhesive force after 168 hours at 60°C/ Adhesive force after 24 hours at 23°C and 50%RH) |  | 1.13 | 1.09 | - |
| Mode of peeling from PET plates |  | Interfacial peeling | Interfacial peeling | Transfer |
| MFR of acrylic adhesive composition (Z) (230°C, 2.16kgf) (g/10 min) |  | 160 | 240 | 610 |

In Examples 15 to 20, the laminates had an adhesive layer that included a kneaded mixture including the tackifier resins and the acrylic block copolymer (I). These adhesive layers tended to have high adhesive force with respect to the PMMA plate and the PET plate, and had a small change in adhesive force even after being tested at 60°C for 7 days, that is, had a small increase in adhesive force over time. Furthermore, because the adhesive layers had high adhesion properties with respect to the substrate layer, the laminate films that had been attached to the PMMA plate and the PET plate as an adherend were peeled from the adherend without leaving any adhesive residue.

The acrylic block copolymer used in Comparative Example 9 did not satisfy the requirements of the acrylic block copolymer (I). The adhesive layer including the adhesive composition containing such an acrylic block copolymer had low adhesion properties with respect to the polyolefin substrate layer. When the laminate film that had been attached to the PMMA plate and the PET plate as an adherend were peeled from the adherend, the adhesive layer separated from the PP substrate layer and the adhesive composition was transferred to the PMMA plate and the PET plate to leave an adhesive residue.

[Table 4]

|  |  |  | Ex. 21 | Ex. 22 |
|---|---|---|---|---|
| Acrylic adhesive compositions (Z) | Acrylic block copolymers (I) | 1-1 | 100 | 100 |
|  |  | I-2 |  |  |
|  |  | I'-3 |  |  |
|  |  | I'-4 |  |  |
|  |  | I-5 |  |  |
|  |  | I-6 |  |  |
|  | Tackifier resins (P) | P-1 |  | 25 |
|  |  | P-2 |  |  |
|  |  | P-3 |  |  |
|  |  | P-4 |  |  |
|  |  | P-5 |  |  |
|  |  | P-6 |  |  |
|  |  | P-7 | 25 |  |
|  |  | P-8 | 50 | 50 |
|  |  |  |  |  |
|  |  |  |  |  |
|  | Styrenic thermoplastic elastomer (Q) |  |  |  |

(continued)

| | | | Ex. 21 | Ex. 22 |
|---|---|---|---|---|
| Evaluation items | Adhesive force with respect to PET plates First measurement (After one day at r.t. following application) | N/25 mm (average) | 210 | 12.7 |
| | Adhesive force with respect to PET plates Second measurement (After four days at r.t. following application) | | 12.4 | 8.50 |
| | Adhesive force with respect to PET plates Fourth measurement (After four days at r.t. following application) | | 11.4 | 8.56 |
| | Fourth adhesive force / First adhesive force *100 | % | 54.4 | 67.4 |
| | Mode of first peeling from PET plates | | Interfacial | Interfacial |
| | Mode of second peeling from PET plates | | Interfacial | Interfacial |
| | Mode of fourth peeling from PET plates | | Interfacial | Interfacial |
| | Adhesive force with respect to PP plates First measurement (After one day at r.t. following application) | N/25 mm (average) | 7.80 | 2.13 |
| | Adhesive force with respect to PP plates Second measurement (After four days at r.t. following application) | | 5.82 | 1.34 |
| | Adhesive force with respect to PP plates Fourth measurement (After four days at r.t. following application) | | 6.62 | 122 |
| | Fourth adhesive force / First adhesive force *100 | % | 84.9 | 57.3 |
| | Mode of first peeling from PP plates | | Interfacial | Interfacial |
| | Mode of second peeling from PP plates | | Interfacial | Interfacial |
| | Mode of fourth peeling from PP plates | | Interfacial | Interfacial |

Examples 21 and 22 involved the laminates used in Examples 15 and 20, respectively, and evaluated their resealability and repeelability (openability) to/from a PET plate and a PP plate. Irrespective of the conditions, the laminates were peeled from the adherends without leaving any adhesive residue. Furthermore, the adhesive force exhibited in the fourth peeling did not drop sharply from the adhesive force in the first peeling, and the values of "adhesive force in the fourth peeling"/"adhesive force in the first peeling" were not less than 50%.

**Claims**

1.  A laminate comprising an adhesive layer (B) including an acrylic adhesive composition (Z), and a substrate layer (A) including a polyolefin resin (a), the acrylic adhesive composition (Z) comprising an acrylic block copolymer (I) having one or more polymer blocks (b1) containing an acrylic acid ester-derived structural unit, and one or more polymer blocks (b2) containing a methacrylic acid ester-derived structural unit, the polymer block (b1) containing a structural unit derived from an acrylic acid ester (b1-1) represented by general formula (1) $CH_2=CH-COOR^1$ (wherein $R^1$ denotes a C7-C12 organic group).

2.  The laminate according to claim 1, wherein the acrylic block copolymer (I) has a weight average molecular weight (Mw) of 65,000 to 300,000.

3.  The laminate according to claim 1 or 2, wherein the acrylic adhesive composition (Z) comprises a tackifier resin (P) .

4. The laminate according to claim 3, wherein the tackifier resin (P) comprises at least one selected from the group consisting of rosin compounds, terpene compounds, and hydrocarbon resins.

5. The laminate according to any one of claims 1 to 4, wherein the acrylic adhesive composition (Z) comprises a styrenic thermoplastic elastomer (Q).

## INTERNATIONAL SEARCH REPORT

| International application No. |
| --- |
| **PCT/JP2021/046427** |

**A. CLASSIFICATION OF SUBJECT MATTER**

*C09J 7/38*(2018.01)i; *C09J 7/24*(2018.01)i; *C09J 153/00*(2006.01)i; *C09J 153/02*(2006.01)i
FI: C09J7/38; C09J7/24; C09J153/00; C09J153/02

According to International Patent Classification (IPC) or to both national classification and IPC

**B. FIELDS SEARCHED**

Minimum documentation searched (classification system followed by classification symbols)

C09J

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2014-125511 A (KURARAY CO., LTD.) 07 July 2014 (2014-07-07) claims (in particular, claims 1, 2, 9), paragraphs [0007], [0024], [0024]-[0027], [0029], [0030], [0032]-[0034], [0045]-[0047], examples (in particular, paragraphs [0091], [0094], table 3, paragraph [0096], table 4, example 2) | 1-5 |
| Y | | 5 |
| X | JP 2015-520774 A (KURARAY CO., LTD.) 23 July 2015 (2015-07-23) claims, paragraphs [0008], [0011], [0022]-[0024], [0037], [0038], [0040], [0049], [0053], examples, comparative examples (in particular, synthesis examples 1, 2, 5-12, 14-18, examples 1-14, comparative examples 3-6, 8, 12-17, paragraphs [0081], [0118]) | 1-5 |
| Y | | 5 |
| X | JP 2017-203172 A (KURARAY CO., LTD.) 16 November 2017 (2017-11-16) claims, paragraphs [0018], [0019], [0026], [0036], [0037], [0049], [0050], [0056]-[0060] | 1-5 |
| Y | | 5 |

☑ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **04 February 2022** | **15 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2021/046427**

| C. | DOCUMENTS CONSIDERED TO BE RELEVANT | | |
|---|---|---|---|
| Category* | Citation of document, with indication, where appropriate, of the relevant passages | | Relevant to claim No. |
| X | JP 2012-172005 A (NITTO DENKO CORP.) 10 September 2012 (2012-09-10) claims, paragraphs [0005], [0036], [0078], [0083]-[0086], [0092], [0113], [0126]-[0128], examples (in particular, example 3) | | 1-4 |
| Y | | | 5 |
| X | JP 2016-160363 A (KURARAY CO., LTD.) 05 September 2016 (2016-09-05) claims (in particular, claims 1, 2, 8, 10), paragraphs [0020], [0025], [0027], [0028], [0034], [0041], [0042], examples (in particular, paragraphs [0071], [0076], table 3, paragraph [0078], table 4, example 6) | | 1-4 |
| Y | | | 5 |

Form PCT/ISA/210 (second sheet) (January 2015)

INTERNATIONAL SEARCH REPORT
Information on patent family members

International application No.

**PCT/JP2021/046427**

| Patent document cited in search report | | | Publication date (day/month/year) | Patent family member(s) | Publication date (day/month/year) |
|---|---|---|---|---|---|
| JP | 2014-125511 | A | 07 July 2014 | (Family: none) | |
| JP | 2015-520774 | A | 23 July 2015 | WO 2013/162056 A1 claims , paragraphs [0008], [0011], [0022]-[0024], [0037], [0038], [0040], [0049], [0053], examples, comparative examples (in particular, synthesis examples 1, 2, 5-12, 14-18, examples 1-14, comparative examples 3-6, 8, 12-17, paragraphs [0081], [0118]) US 2015/0284596 A1 TW 201348369 A CA 2870435 A CN 104245873 A KR 10-2015-0003780 A | |
| JP | 2017-203172 | A | 16 November 2017 | (Family: none) | |
| JP | 2012-172005 | A | 10 September 2012 | US 2013/0302602 A1 claims, paragraphs [0005], [0057], [0101], [0106]-[0109], [0115], [0136], [0149]-[0151], examples (in particular, example 3) WO 2012/111358 A1 EP 2677013 A1 CN 103391980 A | |
| JP | 2016-160363 | A | 05 September 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014125511 A
- JP 2016160303 A
- JP 2017203172 A
- JP H0693060 A
- JP H05507737 A
- JP H11335432 A
- JP 2012502135 A
- JP 2012502136 A
- JP 2011132298 A
- JP 5936791 B

### Non-patent literature cited in the description

- *Macromolecular Chemistry and Physics,* 2000, vol. 201, 1108-1114